# FASCICULE DE BREVET EUROPEEN

(11) **EP 0 493 145 B1**
(45) Date de publication et mention de la délivrance du brevet: **31.08.1994**
(21) Numéro de dépôt: 91403134.9
(22) Date de dépôt: 20.11.1991
(51) Int. Cl.: B64C 27/32, B64C 27/35, B64C 27/48

(54) **Corps de moyeu de rotor de giravion**
Rotornabe eines Drehflügelflugzeuges
Rotor hub for a rotorcraft

(30) Priorité: 27.12.1990 FR 9016358
(43) Date de publication de la demande: 01.07.1992
(73) Titulaire: AEROSPATIALE Société Nationale Industrielle, 75781 Paris Cédex 16 (FR)
(72) Inventeur: Mouille, René Louis Villa "La Pinède", F-13090 Aix-en-Provence (FR)
(74) Mandataire: Phélip, Bruno

(56) Documents cités:
- EP-A- 0 080 920
- EP-A- 0 085 127
- EP-A- 0 099 294
- EP-A- 0 145 512
- EP-A- 0 201 008
- FR-A- 2 454 963
- US-A- 3 322 200

## Description

La présente inventon se rapporte aux rotors de giravions et plus particulièrement aux rotors principaux sustentateurs et propulseurs et/ou aux rotors arrière anticouple d'hélicoptères dont la tête est de type articulé et comporte un corps de moyeu sur lequel chaque pale est retenue à l'encontre de la force centrifuge par des organes de butée et d'articulation qui laissent ladite pale libre d'osciller angulairement en battement, en traînée et en pas autour de trois axes perpendiculaires entre eux et elle concerne un corps de moyeu pour ce type de tête de rotor et une tête de rotor qui comporte ce corps de moyeu.

La présente invention est plus particulièrement adaptée à de telles têtes de rotors articulées lorsque les organes de butée et d'articulation de chaque pale sont constitués par une unique butée lamifiée sphérique.

Le brevet français n° 2 427 251 et son premier certificat d'addition n° 2 456 034, ainsi que le brevet français n° 2 516 891 au nom de la demanderesse se rapportent aux têtes de rotors principaux ou de rotors arrières pour hélicoptères, qui comportent un mât et un corps de moyeu pouvant être intégrés sous la forme d'une pièce monobloc réalisée en un matériau métallique ou composite.

Les rotors d'hélicoptères décrits dans ces documents comportent chacun un corps central de moyeu rigide, auquel le pied de chaque pale du rotor est accouplé par l'intermédiaire d'une butée sphérique lamifiée et d'un amortisseur de traînée, ou d'une contrefiche de rappel élastique en traînée avec amortissement incorporé.

La butée sphérique lamifiée qui constitue une articulation transmettant les efforts centrifuges en provenance de la pale correspondante et autorisant les mouvements de la pale autour de ses trois axes de battement, de traînée et de commande de l'incidence, comporte une partie centrale lamifiée, formée d'un empilement alterné de calottes sphériques d'un matériau rigide et d'un matériau élastique et travaillant en compression et cisaillement entre une armature externe solidaire du moyeu et une armature interne fixée à un organe de liaison à la pale.

L'organe de rappel élastique et d'amortissement de la pale en traînée, qui peut être hydraulique mais qui, de préférence est constitué d'un empilement alterné de plaques rigides et de plaques d'un matériau visco-élastique, ou de tubes coaxiaux entre lesquels est incorporé un manchon cylindrique en un matériau visco-élastique. Cet organe allongé a ses extrémités qui sont accouplées par des rotules au pied de la pale correspondante et en un point du moyeu, de sorte que pour les mouvements angulaires de la pale en traînée, il assure un énergique rappel élastique sur l'axe neutre en introduisant simultanément un certain amortissement de ces mouvements.

Dans le brevet français n° 2 427 251, le corps central du moyeu a la forme d'un plateau ou d'un anneau plat, de pourtour polygonal convexe ou sensiblement circulaire, s'étendant sensiblement radialement par rapport à l'axe de rotation du rotor, qui est confondu avec l'axe du mât-rotor supportant le moyeu. Ce plateau est traversé, dans la direction de l'axe du rotor, par autant d'ouvertures d'alvéoles que le rotor comporte de pales. Une butée sphérique lamifiée est montée en appui par son armature externe contre le bord extérieur de chaque ouverture, tandis que son armature interne est fixée aux extrémités internes des branches d'une pièce fourchue solidaire du pied de la pale correspondante. Le point du pourtour du moyeu, auquel l'organe de rappel élastique et d'amortissement en traînée correspondant est accouplé par une rotule, est situé entre la butée sphérique lamifiée correspondante et celle de la pale immédiatement précédente ou suivante de la pale correspondante, dans le sens de rotation du rotor. De plus, un levier de commande de l'incidence de la pale correspondante est fixé à la pièce fourchue, du côté opposé dudit organe correspondant. De plus, dans le cas d'un rotor principal, la branche inférieure de la pièce fourchue porte, sous son extrémité interne, une butée limitant le battement de la pare correspondante vers le bas, par la coopération avec un anneau réciproque monté coulissant radialement autour du mât-rotor en-dessous du moyeu, de sorte que la butée vienne s'appuyer contre l'anneau réciproque aux faibles vitesses de rotation et à l'arrêt du rotor.

La pièce fourchue peut être constituée par un prolongement du pied de la pale correspondante, ou encore par une chape radiale à l'extrémité interne d'un organe rapporté de liaison au pied de la pale correspondante. Les deux branches de cette chape d'extrémité interne ou de ce prolongement sont fixées à l'armature sphérique lamifiée correspondante par deux boulons. Dans le cas de l'utilisation d'un organe rapporté de liaison au pied de la pale, cet organe présente également, à son extrémité externe, une autre chape par laquelle il est assujetti au pied de la pale correspondante par deux axes sensiblement perpendiculaires au plan du rotor, et dont l'un est amovible pour permettre de replier la pale dans le plan du rotor par pivotement autour de l'autre axe.

Afin d'intégrer, éventuellement, dans le rotor un dispositif de repliage automatique des pales, il a été proposé que cet organe rapporté de liaison soit conformé en manchon, dont une partie cylindrique permet de loger ce dispositif, et qui sert également à fixer le levier de commande de l'incidence de la pale correspondante, l'organe de rappel élastique et d'amortissement en traînée correspondant, et la butée basse coopérant avec l'anneau réciproque.

Dans le but d'éliminer tous les problèmes potentiels qui résultent d'une liaison boulonnée du moyeu sur le mât-rotor, telle que la corrosion sous tension ou de desserrage des boulons, le corps central du moyeu et le mât peuvent être intégrés, et il a été proposé que le corps central rigide du moyeu constitue avec le mât du rotor, une pièce métallique monobloc, par exemple en acier ou en titane et venue de forge ou de matriçage. Cependant, afin de diminuer la vulnérabilité, la masse ou le coût d'un tel mât-moyeu intégré, ce dernier peut être réalisé en matériaux composites, par empilage ou drapage de plis de tissu de fibres synthétiques minérales à haute résistance mécanique qui sont préimprégnés et agglomérés par une résine synthétique, ultérieurement polymérisée et durcie. Dans ce dernier cas, afin de donner un bon caractère "fail-safe" au mât-moyeu intégré, une ceinture de structure composite est avantageusement bobinée autour du plateau de moyeu.

Les rotors décrits dans le premier certificat d'addition N° 2 456 034 au brevet français mentionné ci-dessus se distinguent essentiellement de ceux qui font l'objet de ce brevet principal par le fait, que leur corps de moyeu comporte un fût central, qui prolonge le mât du rotor, et qui porte un plateau supérieur et un plateau inférieur. L'armature externe de chaque butée sphérique lamifiée est encastrée entre ces plateaux, et est fixée directement à leur bord à la façon d'une entretoise rigide. Le pied de la pale correspondante est réuni à l'armature interne de la butée sphérique lamifiée par une chape radiale et évidée pour le libre passage de cette butée sphérique. Ce certificat d'addition propose également que l'ensemble du moyeu c'est-à-dire son fût et ses deux plateaux, forme avec la partie supérieure du mât-rotor une pièce monobloc qui peut être métallique et venir de forge ou de matriçage. Par analogie avec les développements proposés des rotors décrits dans le brevet principal, on peut envisager de réaliser, pour l'équipement de rotor selon le certificat d'addition mentionné ci-dessus, un mât-moyeu intégré à deux plateaux sensiblement radiaux et en une structure composite. Il est à noter qu'une telle réalisation irait bien au-delà, dans le sens de la diminution du nombre des pièces et de la suppression des liaisons, des réalisations de rotor qui sont décrites dans le brevet français N° 2 529 860 également au nom de la demanderesse, et qui comprennent deux plateaux en matériau composite fixés à une entretoise métallique, qui les sépare, et sur la partie supérieure du mât-rotor métallique par des boulons, dans une architecture de base identique à celle des rotors décrits dans le brevet français N° 2 516 891 et se distinguant essentiellement des rotors du certificat d'addition mentionné ci-dessus par le fait que le pied de chaque pale présente une boucle qui entoure directement la butée sphérique lamifiée correspondante et est fixé à l'armature interne de cette dernière.

Cependant, si le fonctionnement et l'endurance en service des têtes de rotors réalisées sous forme de mâts-moyeux intégrés, mentionnés ci-dessus sont satisfaisants, elles peuvent présenter certains inconvenients :
- pour les mâts-moyeux métalliques comportant un seul plateau radial à alvéoles ou deux plateaux radiaux sans alvéoles reliés à l'extrémité du mât par lequel ils sont entraînés en rotation, par une partie en forme de corolle épanouie, la fabrication et l'usinage des pièces par tournage et fraisage à partir d'ébauches forgées ou matricées ne présentent pas de difficultés importantes. Par contre, le ou les plateaux et leur liaison au mât en forme de corolle ont des formes assez massives qui ne permettent pas une utilisation optimale de la matière métallique en regard des efforts, moments et couples que transmettent ces pièces, de telle sorte que ces éléments travaillants ne sont pas optimisés en masse ;
- pour les mâts-moyeux de ces mêmes types mais réalisés en matériau composite, il est au contraire aisé de prévoir la direction et le nombre de couches successives des fibres et/ou des tissus pour optimiser ces pièces du point de vue de leur masse mais la fabrication industrielle en est délicate et coûteuse. En effet, la forme concave ou doublement concave du mât qui s'épanouit en forme de corolle pour former la partie rigide du moyeu et les variations importantes d'épaisseur conduisent à des opérations très complexes de drapage et/ou de bobinage de rubans ou de tissus de fibres à haute résistance mécanique dans cette zone évolutive présentant des courbures dans des directions sensiblement perpendiculaires.

Le but de la présente invention est de proposer une architecture du corps de moyeu de rotors de giravions, qui fasse en sorte que ce corps de moyeu, reliant les attaches de pale entre elles, ne soit sollicité que par les efforts centrifuges de traction en provenance de chaque pale pour les transmettre et les équilibrer sur ceux de la ou des pales situées du côté opposé, tandis que les efforts verticaux de portance des pales, les moments de basculement de la tête de rotor ainsi que le couple d'entraînement en rotation du rotor soient transmis directement entre les attaches de pales d'une part et l'extrémité externe du mât d'autre part sans intéresser le corps de moyeu lui-même.

L'invention remédie aux différents inconvénients décrits ci-dessus, et présente à la fois une structure simplifiée et plus légère avec une sécurité et une fiabilité améliorées, tout en pouvant être fabriquée en métal ou en matériaux composites d'une manière plus simple, plus économique et plus fiable.

L'invention a ainsi pour objet un corps de moyeu très rigide, dont le poids est plus faible, avec une durée de vie augmentée, et qui peut être obtenu par des opérations de fabrication plus simples et moins coûteuses, d'où une amélioration de la productivité des giravions qui en sont équipés.

L'invention a également pour objet un corps de moyeu, dont la structure est adaptée à une réalisation en matériaux composites, afin qu'il présente une masse encore plus faible et un bon caractère "fail-safe".

Le corps de moyeu de rotor de giravion selon l'invention est du type où chaque pale est reliée audit corps par des articulations et des organes de liaison, et il comporte deux éléments résistants dont les plans sont sensiblement parallèles l'un par rapport à l'autre, et perpendiculaires à l'axe du mât-rotor. Les deux éléments résistants sont séparés l'un de l'autre par un espace qui a une distance suffisante, de façon à permettre de loger lesdites articulations. Celles-ci peuvent avantageusement être réalisées sous la forme de butées sphériques lamifiées dont l'une des armatures rigides est solidaire en mouvement du pied de la pale correspondante. L'autre armature rigide de chacune des butées est fixe par rapport aux deux éléments du corps de moyeu, et elle est disposée au voisinage de la périphérie de ces éléments de manière à constituer une entretoise rigide, qui permet de transférer directement les efforts entre ladite armature rigide et les deux éléments du corps de moyeu.

Cette disposition permet en outre de rapprocher les butées sphériques lamifiées du centre du moyeu et par là conduit à une réduction de masse et une diminution des moments d'excitation vibratoire liés à l'excentricité de cette articulation.

Le corps de moyeu de rotor de giravion selon l'invention se caractérise en ce que les deux éléments sont des anneaux : un anneau externe par rapport au mât-rotor et un anneau interne par rapport audit mât qui forment chacun une jante résistante et rigide, et qui sont reliés par une paroi mince de forme sensiblement cylindrique. Cette paroi mince comporte au moins autant d'ouvertures qu'il y a de pales. Chaque ouverture a des dimensions suffisantes pour le passage des organes d'articulation et de liaison de la pale correspondante avec leurs débattements angulaires. De préférence, le corps de moyeu est constitué par un anneau externe et un anneau interne, qui sont reliés entre eux par la paroi mince disposée à la périphérie de ces anneaux. Le corps du moyeu selon l'invention est relié au mât-rotor par une embase mince de forme tronconique, qui est raccordée à l'anneau interne. Avantageusement, le corps de moyeu, l'embase tronconique et le mât forment un ensemble monobloc.

Selon une variante de l'invention, le corps de moyeu et l'embase tronconique mince forment un ensemble monobloc et la petite base de l'embase tronconique est fixée à l'extrémité du mât par une collerette boulonnée.

Selon une autre variante de l'invention, le corps du moyeu est relié au mât-rotor par une embase indépendante de forme mince et tronconique, dont la grande base supérieure est solidarisée avec la face inférieure de l'anneau interne par des moyens de fixation. Ces moyens de fixation peuvent être avantageusement les moyens de fixation des armatures rigides des butées sphériques lamifiées avec les deux anneaux du corps de moyeu.

L'invention offre la possibilité d'avoir au moins un des anneaux avec une forme cylindrique circulaire, ou dans une autre configuration d'avoir l'un au moins des anneaux avec une forme cylindrique polygonale à sommets arrondis, dont chaque sommet correspond à une pale. De préférence, l'anneau interne et l'anneau externe sont semblables, ce qui permet de standardiser la fabrication.

Plus précisément, selon un mode de réalisation de l'invention, le moyeu a une structure où chaque anneau comporte un ou deux alésages dans chacune des zones des ouvertures qui sont aménagées dans la paroi mince. Ce ou ces alésages est ou sont réalisés dans un élargissement de l'anneau. Chaque alésage de l'anneau externe fait face à un alésage correspondant de l'anneau interne de manière à recevoir les moyens de fixation de l'une des armatures rigides de la butée sphérique lamifiée correspondante et cela, suivant un axe sensiblement parallèle à l'axe du corps de moyeu selon l'invention.

Avantageusement, et afin d'améliorer la tenue des anneaux du corps de moyeu à l'encontre des efforts centrifuges provenant des pales, un au moins des anneaux est entouré d'une ceinture de renfort en matériaux composites. De préférence, l'anneau externe et l'anneau interne sont également entourés d'une ceinture de renfort. Cette structure permet, soit d'augmenter les caractéristiques de tenue mécanique avec un même poids, soit avec les mêmes caractéristiques de tenue mécanique de diminuer sensiblement le poids de l'ensemble. De plus, elle offre une caractéristique de sécurité en fatigue dite "fail-safe", particulièrement vis-à-vis de la retenue des pales à l'encontre de la force centrifuge.

Afin de remplir au mieux sa fonction, la ceinture de renfort est avantageusement constituée par des fibres unidirectionnelles à haute résistance mécanique agglomérées par de la résine. Les fibres peuvent être minérales ou synthétiques, et elles sont bobinées et agglomérées par une résine synthétique qui est ensuite polymérisée à chaud. Selon une constitution préférée, ce matériau est constitué par des stratifils unidirectionnels d'aramide, qui sont bobinés et agglomérés par une résine époxyde, durcie par polymérisation à chaud.

Le corps de moyeu d'un rotor de giravion conforme à un mode de réalisation de l'invention, et tel que présenté ci-dessus, peut être métallique par exemple en acier, en titane ou en alliage d'aluminium, et il peut venir de forge ou de matriçage. Cependant, dans un autre mode de réalisation, et afin de diminuer la vulnérabilité, la masse et le coût d'un tel corps de moyeu, ce dernier peut être réalisé en matériau plastique armé de libres à haute résistance.

Lorsque le corps de moyeu est métallique avec un ou des anneaux munis d'une ceinture de renfort, celle-ci peut être avantageusement aménagée dans un logement qui est prévu à cet effet dans l'anneau correspondant. Ce logement suit le contour dudit anneau et a une section polygonale, qui est débouchante radialement à l'extérieur. L'invention prévoit notamment que le logement peut être de section carrée, ou dans une variante de réalisation, ce logement peut être de section rectangulaire.

Dans le cas où le corps de moyeu rigide est en matériau plastique armé, et selon un mode de réalisation préférentiel, chaque anneau est constitué par autant de pièces plates identiques qu'il y a des pales. Ces pièces plates sont juxtaposées de manière à former en un ensemble continu une ossature pour chacun des anneaux. De plus, ces pièces plates ont un coin extérieur arrondi, et elles sont munies, dans l'axe de symétrie du coin, d'un ou de deux alésages. Ces alésages reçoivent les axes de fixation de l'armature rigide de la butée sphérique lamifiée. Enfin, chacun de ces anneaux ainsi formés est entouré par une ceinture de liaison et de renfort et les anneaux sont reliés entre eux par une paroi cylindrique mince dans laquelle sont pratiquées des ouvertures de passage des butées sphériques et des organes de liaison des pales.

Avantageusement, les pièces plates sont réalisées en compound moulé de résine armée avec des fibres coupées de carbone. Selon une variante de l'invention, les pièces plates sont réalisées par un empilage de tissus de carbone pré-imprégnés, moulés et polymérisés à chaud. Sur cette ossature est disposée par bobinage et/ou drapage une coque constituée par des fils, des rubans ou des tissus de fibres à haute résistance imprégnés de résine synthétique polymérisable à chaud pour constituer les ceintures de renfort des anneaux ainsi que la paroi mince de liaison des deux anneaux dans laquelle sont découpées les ouvertures pour le passage des butées sphériques et des organes de liaison de chaque pale.

Avec cette structure, il est possible d'avoir une embase qui est réalisée par un empilage de tissus à haute résistance pré-imprégnés, moulés et polymérisés à chaud ; alors que dans une variante de réalisation, il est prévu de réaliser cette embase par un empilage de tissus de carbone.

L'invention a également pour objet une tête de rotor de giravion du type comportant un corps de moyeu, qui est conforme à l'invention qui a été présentée ci-dessus. Dans cette configuration, chacune des butées sphériques lamifiées a son armature rigide externe, qui est liée aux deux anneaux par l'intermédiaire des moyens de fixation. Ces moyens de fixation consistent en une ou deux broches de liaison boulonnées, qui viennent se fixer dans chacun des alésages correspondant desdits anneaux, de manière à constituer un entretoisement rigide entre les deux anneaux. Chacune de ces broches de liaison est constituée par un boulon muni à son extrémité supérieure d'une tête hexagonale, et dont le filetage reçoit une rondelle et un écrou freiné. Le boulon se monte dans un axe cylindrique creux, qui s'engage dans chacun des alésages correspondant des anneaux externe et interne, et dans un alésage qui est aménagé dans l'armature rigide extérieure de chacune des butées sphériques. De plus, ledit axe creux est muni d'une collerette, qui vient s'appliquer sur la face supérieure de l'anneau externe, tandis que la rondelle s'applique contre la face inférieure de l'anneau interne, et que la tête hexagonale du bouton cylindrique s'applique contre la collerette. De plus, et avantageusement, chaque alésage reçoit une douille qui est munie d'un épaulement. Cet épaulement est monté du côté de l'armature rigide externe, qui vient s'appliquer sur ledit épaulement.

Cette architecture permet d'avoir, dans un premier mode de réalisation, des butées sphériques lamifiées avec une armature rigide interne, qui est reliée au pied de pale correspondant par une disposition dudit pied de pale en boucle unique. Cette boucle unique peut être en stratifils qui passent derrière l'armature interne de la butée sphérique lamifiée.

Dans un deuxième mode de réalisation, chacune des butées sphériques lamifiées a son armature rigide interne, qui est reliée au pied de pale correspondant au moyen d'un manchon métallique intermédiaire dont l'extrémité interne en forme de maillon entoure l'armature interne de la butée lamifiée sphérique, et qui comporte sur son extrémité externe une double chape d'attache de pale à deux broches.

La tête de rotor de giravion comporte également pour chaque pale des organes de liaison qui sont constitués par une contrefiche de rappel élastique et d'amortissement en trainée et un dispositif de commande de pas. La contrefiche de rappel élastique et d'amortissement en traînée a une de ses extrémités, qui est reliée au pied de pale correspondant, et l'autre extrémité est reliée au corps du moyeu. Dans une variante de l'invention, chaque contrefiche a une de ses extrémités qui est reliée au pied de pale correspondant, et l'autre extrémité qui est reliée au pied de pale voisin. Le dispositif de commande de pas est constitué par un levier de commande de pas qui est entraîné par un dispositif d'actionnement connu, par exemple par araignée ou par plateaux cycliques.

Afin de limiter les battements vers le haut et vers le bas de chaque pale, la tête de rotor de giravion, selon un mode de réalisation de l'invention, comporte des butées de battement. Chaque pale comporte une butée haute de battement et une butée basse de battement. La butée haute de battement est en appui direct sur l'anneau externe. La butée basse de battement vient en appui sur un renfort métallique qui est monté sur l'anneau interne. Ce renfort métallique est fixé par l'intermédiaire de l'axe vertical de liaison entre la face inférieure dudit anneau interne et la rondelle correspondante. Le renfort métallique est conformé et coudé pour suivre le contour inférieur et vertical de l'anneau interne.

Afin de limiter les débattements angulaires en trainée de chaque pale, la tête de rotor de giravion, selon un mode de réalisation de l'invention peut être équipée de butées de traînée, qui viennent en appui direct contre au moins un des anneaux.

Dans toutes les configurations prévues par l'invention, on voit que la tête de rotor a un moyeu présentant une grande rigidité et qui a une structure extrêmement simple avec un petit nombre de pièces. De plus, cette structure, qui est largement ouverte et qui libère la partie centrale, permet d'y monter les éléments d'articulation et de liaison. Le moyeu selon l'invention a ainsi des formes relativement simples et adaptées aux efforts à subir, ce qui permet de diminuer la masse et les coûts de fabrication de cette tête de rotor, tout en améliorant sa tenue vis-à-vis des sollicitations statiques et dynamiques, ce qui est un facteur de sécurité et de fiabilité. En particulier, la compacité de cette tête de rotor permet de donner à l'articulation de battement de chaque pale une faible excentricité, disposition favorable à la réduction de l'excitation vibratoire.

Les sollicitations principales sont essentiellement les efforts centrifuges qui s'exercent longitudinalement sur les pales et qui, dans la disposition du corps de moyeu suivant l'invention, s'équilibrent entre pales opposées en sollicitant en traction les deux anneaux du corps de moyeu, simultanément chaque anneau transmettant sensiblement la moitié de la charge.

Ces sollicitations principales sont constituées également par les efforts verticaux de portance en provenance des pales et le moment de basculement de la tête rotor qui, dans la disposition du corps de moyeu suivant l'invention, passe directement des pales dans le mât par l'intermédiaire de l'embase tronconique disposée entre l'anneau interne et le mât, sans intéresser les deux anneaux du corps de moyeu, la forme conique donnant à cette embase une bonne résistance aux efforts appliqués sur ses bords avec de faibles contraintes de flexion.

Ces sollicitations principales sont enfin constituées par le couple moteur qui s'exerce sur le sommet du mât et qui est transmis directement aux attaches de pales par torsion de l'embase tronconique, toujours sans intéresser les anneaux du corps de moyeu.

En outre, l'encombrement d'une tête de rotor ayant un tel moyeu est limité du fait du logement des organes de retenue et d'articulation dans sa partie intérieure, et la traînée aérodynamique est réduite. L'ensemble de ces résultats avantageux concourrent à augmenter les performances d'un hélicoptère qui est équipé d'une telle tête de rotor, tant au niveau de son ou ses rotors principaux ou sustentateurs, qu'au niveau de son rotor arrière ou anticouple. De plus, cette disposition selon l'invention est très intéressante, car elle permet de prévoir un carénage aérodynamique de l'ensemble de la tête de rotor, qui est relativement aisé à réaliser pour cette forme ramassée avec des dimensions minimales. De plus, la forme générale d'un tel moyeu rigide est bien adaptée à une réalisation en matériaux composites que les formes connues de l'état de la technique, car elle permet de solliciter et de faire travailler ces matériaux composites dans le sens des fibres, ce qui est rendu possible par la répartition particulière du cheminement des efforts, moments et couples susmentionnés dans les différents constituants résistants du corps de moyeu selon l'invention.

D'autres avantages ressortiront de l'invention, qui sera mieux comprise à l'aide de la description donnée ci-dessous d'exemples particuliers de réalisation, décrits à titre non limitatif, en référence aux dessins annexés sur lesquels :
- la figure 1 est une vue schématique en perspective du corps de moyeu monobloc pour giravion selon l'invention ;
- la figure 2 est une vue en coupe axiale de l'ensemble d'une tête de rotor de giravion comportant un corps de moyeu métallique correspondant à la figure 1 avec les pieds de pale en boucle, le plan de coupe passant par le plan II-II de la figure 3 ;
- la figure 3 est une vue en coupe partielle de la figure 2 par le plan passant par l'axe des pales, les éléments de liaison élastique et d'amortissement en traînée étant disposés entre deux pales voisines ;
- la figure 4 est une vue en coupe axiale de l'ensemble d'une tête de rotor de giravion comportant un corps de moyeu métallique monobloc selon un autre mode de réalisation de l'invention, avec les pieds de pale en boucle, le plan de coupe passant par le plan IV-IV de la figure 5 ;
- la figure 5 est une vue en coupe partielle de la figure 4 par le plan passant par l'axe des pales, l'ensemble de la pale située dans la partie supérieure de la figure n'étant pas représentée ;
- la figure 6 est une vue en coupe axiale de l'ensemble d'une tête de rotor de giravion comportant un corps de moyeu métallique monobloc selon un autre mode de réalisation de l'invention, qui est raccordé à chaque pale par un manchon intermédiaire, le plan de coupe passant par le plan VI-VI de la figure 7 ;
- la figure 7 est une vue en coupe partielle de la figure 6 par le plan passant par l'axe des pales, l'attache des moyens de liaison élastique et d'amortissement en traînée de chaque pale se faisant dans la zone centrale du corps de moyeu ;
- la figure 8 est une vue en coupe axiale de l'ensemble d'une tête de rotor de giravion comportant un corps de moyeu métallique selon l'invention, avec les pieds de pale en boucle, ledit corps de moyeu étant raccordé au mât par une embase métallique indépendante ;
- la figure 9 est une vue en coupe axiale de l'ensemble d'une tête de rotor de giravion comportant un corps de moyeu métallique selon l'invention, avec les pieds de pale en boucle, ledit corps de moyeu étant intégré à une embase métallique et l'attache des moyens de liaison élastique et d'amortissement en traînée de chaque pale se faisant à la périphérie du corps de moyeu ;
- la figure 10 est une vue en coupe partielle de la figure 9 par le plan passant par l'axe des pales ;
- la figure 11 est une vue en coupe axiale de l'ensemble d'un corps de moyeu en matériau composite selon l'invention ;
- la figure 12 est une vue en coupe partielle suivant le plans XII-XII de la figure 11.

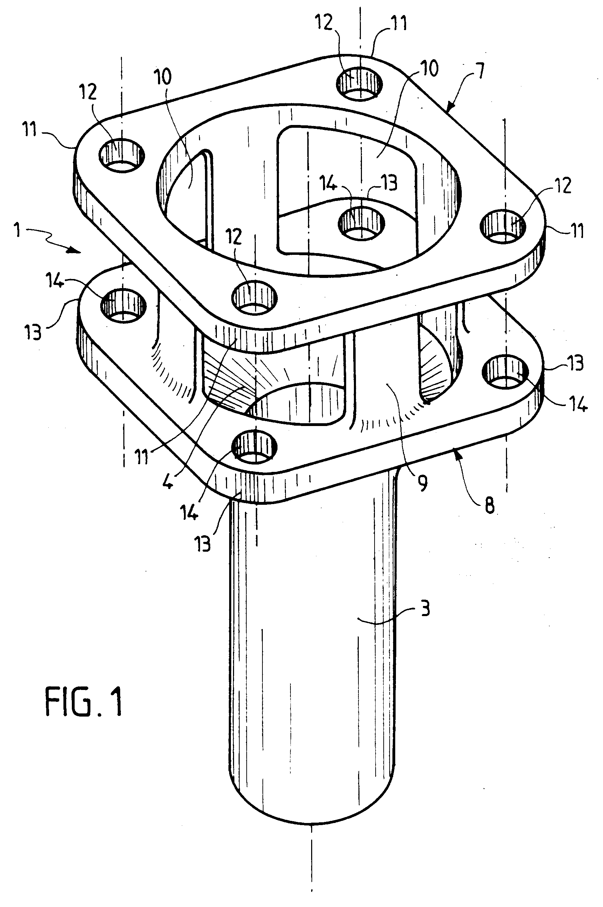

La figure 1 est une vue schématique en perspective d'un corps de moyeu 1 monobloc de tête de rotor de giravion selon l'invention qui est du type où chaque pale 2 du rotor est reliée à ce corps de moyeu 1 par des articulations et des organes de liaison. Le corps de moyeu 1 comporte essentiellement deux éléments résistants en forme d'anneau, un anneau externe 7 et un anneau interne 8. L'anneau externe 7 et l'anneau interne 8 sont situés dans des plans, qui sont sensiblement parallèles l'un par rapport à l'autre, et qui sont perpendiculaires à l'axe du mât 3 de rotor. Ces deux anneaux 7 et 8 sont séparés l'un de l'autre par un espace suffisant de manière à avoir une distance qui permette de loger les articulations qui sont réalisées sous la forme de butées sphériques lamifiées 5. Chacune de ces butées sphériques lamifiées 5 est reliée d'une part avec le pied de la pale 2 correspondante avec laquelle elle est solidaire en mouvement autour de trois axes perpendiculaires concourant au centre de la butée sphérique, et elle est d'autre part fixée à la périphérie des deux anneaux 7 et 8, de manière à constituer une entretoise rigide entre eux. L'anneau externe 7 et l'anneau interne 8 forment chacun une jante rigide et ils sont reliés l'un à l'autre par une paroi mince 9 de forme sensiblement cylindrique, qui est disposée sensiblement à la périphérie de ces anneaux. La paroi mince 9 comporte des ouvertures 10 qui ont des dimensions suffisantes pour permettre le passage de la butée sphérique lamifiée 5 avec l'attache de la pale 2 correspondante.

Les figures 1, 2 et 3 représentent un mode de réalisation de l'invention où le corps de moyeu 1 de rotor de giravion est métallique et monobloc avec le mât 3. Dans cette architecture, le corps de moyeu 1 comporte un anneau externe 7 et un anneau interne 8 qui sont reliés l'un à l'autre par une paroi mince 9. Dans cette paroi mince 9 sont pratiquées des ouvertures 10 laissant passer les butées sphériques lamifiées 5 de telle sorte, que ne subsiste entre deux pales voisines 2, qu'un élément de la paroi mince 9 de liaison entre l'anneau externe 7 et l'anneau interne 8.

Dans l'exemple représenté sur la figure 1, le corps de moyeu 1 est relié à l'extrémité du mât 3 de rotor par l'intermédiaire d'une embase 4 de forme tronconique convergente vers l'extrémité du mât 3, de manière à relier l'anneau interne 8 du corps de moyeu 1 avec le mât 3. L'embase mince 4 a sa grande base externe qui est solidaire avec l'anneau interne 8 et elle a sa petite base interne qui est solidaire avec l'extrémité du mât 3 de rotor, de manière à former un seul ensemble monobloc.

L'anneau externe 7 et l'anneau interne 8 sont semblables et ont une forme cylindrique polygonale avec des sommets arrondis. L'anneau externe 7 a des sommets arrondis 11 et l'anneau interne 8 a des sommets arrondis 13 qui correspondent chacun à une pale 2. Ainsi, l'axe d'un sommet arrondi 11 correspond à l'axe d'un sommet arrondi 13, qui correspondent l'un et l'autre à l'axe de l'ouverture 10 de la paroi mince 9 et à l'axe de la pale 2 correspondante. Dans le cas des figures 1, 2 et 3, le rotor pour hélicoptère comporte quatre pales diamétralement opposées et montées dans un corps de moyeu 1 avec des anneaux ayant une forme carrée à sommets arrondis 11 et 13 qui correspondent aux ouvertures 10 de la paroi mince 9.

Les butées sphériques lamifiées 5 qui constituent l'organe unique de retenue d'articulation de chaque pale en battement, traînée et pas sont d'un type bien connu, et elles comportent une partie centrale 15 associée à une armature rigide interne 16, et à une armature rigide externe 17. La partie centrale 15 est constituée par un empilement alterné de couches rigides qui sont généralement métalliques et de couches d'élastomère en forme de calotte sphérique. Cette partie centrale 15 est adhérisée d'une part en position radiale interne, sur la face convexe de la calotte sphérique de l'armature rigide externe 17, et d'autre part en position radiale externe sur la face concave de la calotte sphérique de l'armature rigide interne 16 de la butée sphérique lamifiée 5.

Chacune de ces butées sphériques lamifiées 5 est disposée entre l'anneau externe 7 et l'anneau interne 8, et elles sont fixées à ces anneaux par l'intermédiaire de leur armature rigide externe 17. Pour cela, l'anneau externe 7 comporte des alésages 12 et l'anneau interne 8 comporte des alésages 14. Ces alésages 12 et 14 sont disposés chacun dans la zone des ouvertures 10 aménagées dans la paroi mince 9. Chaque alésage 12 est situé sur l'axe de la pale 2 correspondante et il est réalisé dans un élargissement de l'anneau externe 7 ; et chaque alésage 14 est situé sur l'axe de la pale 2 correspondante et il est réalisé dans un élargissement de l'anneau interne 8. Chaque alésage 12 de l'anneau externe 7 fait face à un alésage 14 correspondant de l'anneau interne 8 de manière à recevoir les moyens de fixation de l'armature rigide externe 17 de la butée sphérique lamifiée 5 correspondante. Les deux alésages 12 et 14 qui se font face, matérialisent ainsi un axe qui est sensiblement parallèle à l'axe du corps de moyeu 1. Chacun de ces axes est ainsi l'axe des moyens de fixation de chacune des butées sphériques lamifiées 5 correspondantes sur les anneaux externe 7 et interne 8.

Chacun des moyens de fixation des butées sphériques lamifiées 5 est constitué par une broche de liaison boulonnée 21, qui comporte un boulon 28 monté dans un axe cylindrique creux 22. L'axe cylindrique creux est muni, à une des ses extrémités, d'une collerette 23. Cet axe cylindrique creux 22 est monté dans l'alésage 12 correspondant de l'anneau externe 7, dans un alésage 35 de l'armature externe 17 de la butée sphérique lamifiée 5 correspondante, et dans l'alésage 14 correspondant de l'anneau interne 8, la collerette 23 venant s'appliquer sur la face externe 24 de l'anneau externe 7. Le boulon 28 s'engage dans l'axe cylindrique creux 22, a une tête 29 qui s'applique sur la collerette 23, et a une autre extrémité filetée 30 sur laquelle s'engage une rondelle 31 et un écrou freiné 32. La longueur sous la collerette 23 de l'axe cylindrique creux 22 est légèrement inférieure à la distance entre la face externe 24 de l'anneau externe 7 et la face externe 25 de l'anneau interne 8 de manière que l'écrou freiné 32 vienne bloquer l'ensemble en appliquant la rondelle 31 sur la bordure de l'alésage 14 appartenant à la face externe 25 de l'anneau interne 8. De plus, chaque alésage 12 et 14, ménagés dans les anneaux 7 et 8, porte une douille 33 munie d'un épaulement 34. La douille 33 qui est montée dans l'alésage 12, a son épaulement 34 du côté de la face interne 26 de l'anneau externe 7, et la douille 33 qui est montée dans l'alésage 14, a son épaulement 34 du côté de la face interne 27 de l'anneau interne 8, de manière à ce que chaque épaulement 34 vienne s'appliquer sur l'armature externe 17 de la butée sphérique lamifiée 5 correspondante formant entretoise entre les deux anneaux 7 et 8.

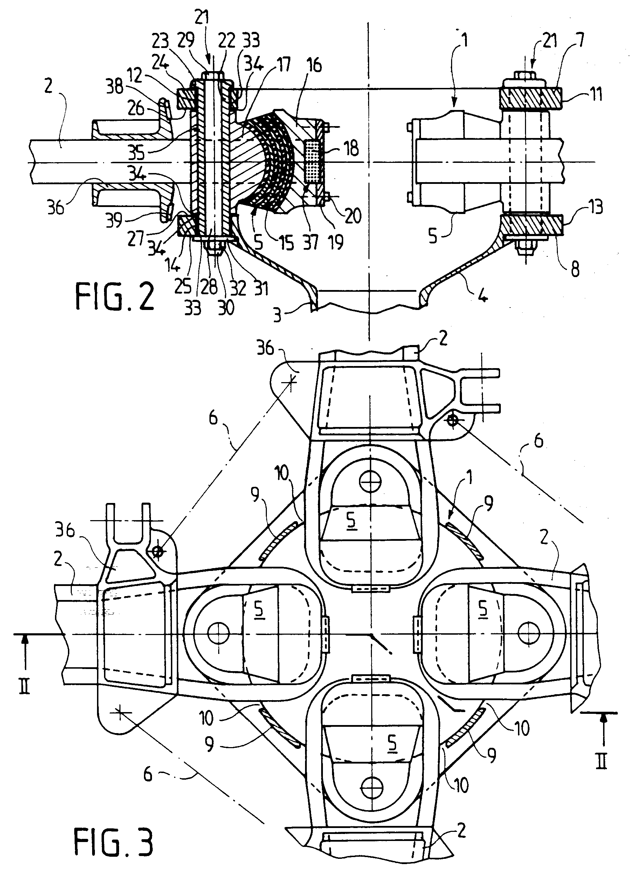

Dans le mode de réalisation de l'invention représenté sur les figures 2 et 3, chaque butée sphérique lamifiée 5 a son armature interne, qui est encastrée à l'intérieur d'une boucle rigide 18 constituant l'attache de la pale 2. Ainsi, la pale 2, dans la zone d'emplanture, est aménagée en une boucle rigide 18 de section rectangulaire qui constitue l'attache de la pale 2 et contourne de façon continue la butée sphérique lamifiée 5, et qui vient s'encastrer dans un logement 37 correspondant aménagé dans l'armature interne 16 de ladite butée sphérique 5. L'attache de la pale 2 en forme de boucle rigide 18 est maintenue en place par une plaque 19 fixée sur l'armature interne 16 par des vis 20. La boucle rigide 18 est constituée de stratifils. Chaque stratifil est réalisé par un ensemble de fils de base, de filaments ou de fibres synthétiques ou minérales à haute résistance mécanique, par exemple de verre, qui sont enduits et agglomérés parallèlement en un faisceau par une résine synthétique durcie. Cette boucle rigide 18 se prolonge dans la partie courante de la pale 2 formant progressivement le longeron résistant, au bord d'attaque, ainsi que des éléments du bord de fuite.

Les organes de liaison entre le corps de moyeu 1 selon l'invention et chacune des pales 2 sont constitués par des contrefiches 6 de rappel élastique et d'amortissement de la pale en traînée, qui sont schématisées par des axes sur la figure 3. Ces organes de liaison comportent également un dispositif de commande de pas qui est réalisé par un levier de commande de pas, qui est entrainé par un dispositif d'actionnement. Dans le mode de réalisation représenté, ce levier de commande de pas est constitué par une chape, qui est montée entre les extrémités de deux plaques 36, dont l'une de ces plaques est disposée sur la partie interne du pied de la pale 2, et dont l'autre est disposée sur la partie externe de cette même pale 2. Chacune des contrefiches 6 de rappel élastique et d'amortissement de la pale 2 en traînée est disposée à l'extérieur du corps de moyeu 1, et a une de ses extrémités qui est reliée au pied de la pale correspondante et l'autre extrémité qui est reliée au pied de la pale voisine. Pour ce faire, chacune des extrémités de la contrefiche 6 de rappel élastique et d'amortissement de la pale 2 en traînée est amarrée par un axe d'articulation à la plaque de serrage 36 du pied de pale 2 correspondante. De plus, dans ce mode de réalisation de l'invention, la paroi mince 9 a une forme qui est sensiblement circulaire. Il faut noter également que, selon une variante de l'invention non représentée sur les figures, les anneau externe 7 et interne 8 peuvent avoir une forme cylindrique circulaire.

La tête de rotor qui est équipée du corps de moyeu 1 selon l'invention comporte également des butées de battement constituées par un patin 38 de butée haute, et par un patin 39 de butée basse de battement. Le patin 38 de butée haute de battement est aménagé sur un bossage, qui est disposé au-dessus de la plaque 36 externe. Cette butée haute vient en appui direct sur l'anneau externe 7. Le patin 39 de butée basse de battement est aménagé également sur un bossage qui est disposé au-dessous de la plaque 36 interne. Cette butée basse vient en appui direct sur l'anneau interne 8.

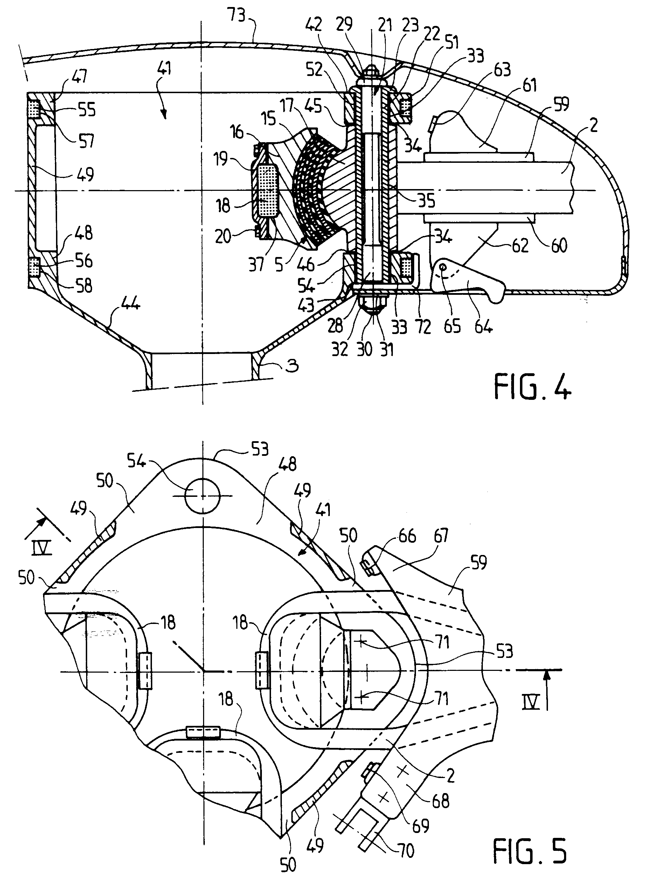

Les figures 4 et 5 représentent un mode de réalisation de l'invention où le corps de moyeu 41 de rotor de giravion est métallique et monobloc avec le mât 3 de rotor. Dans cette architecture, le corps de moyeu 41 comporte un anneau externe 47 et un anneau interne 48 qui sont reliés l'un à l'autre par une paroi mince 49 de forme sensiblement cylindrique, qui est disposée à la périphérie de ces anneau. Dans cette paroi mince 49 sont pratiquées des ouvertures 50 laissant passer les butées sphériques lamifiées 5 de telle sorte que ne subsiste entre deux pales voisines 2, qu'un élément de la paroi mince 49 de liaison entre l'anneau externe 47 et l'anneau interne 48. Les deux anneaux 47 et 48 sont séparés l'un de l'autre par un espace suffisant de manière à avoir une distance qui permette de loger les butées sphériques lamifiées 5. Chacune de ces butées sphériques lamifiées 5 est reliée d'une part avec le pied de la pale 2 correspondante avec laquelle elle est solidaire en mouvement autour de trois axes perpendiculaires concourant au centre de la butée sphérique 5, et elle est d'autre part fixée à la périphérie des deux anneaux 47 et 48, de manière à constituer une entretoise rigide entre eux. Chacune des ouvertures 50 a des dimensions suffisantes pour permettre le passage de la butée sphérique lamifiée 5 avec l'attache de la pale 2 correspondante.

Dans l'exemple représenté sur les figures 4 et 5, le corps de moyeu 41 est relié à l'extrémité du mât 3 par l'intermédiaire d'une embase mince 44 de forme tronconique convergente vers l'extrémité du mât 3, de manière à relier l'anneau interne 48 du corps de moyeu 41 avec le mât 3. L'embase 44 a sa grande base externe qui est solidaire avec l'anneau interne 48 et elle a sa petite base interne qui est solidaire avec l'extrémité du mât 3 de rotor, de manière à former un seul ensemble monobloc.

L'anneau externe 47 et l'anneau interne 48 sont semblables et ils ont une forme cylindrique polygonale avec des sommets arrondis. L'anneau externe 47 a des sommets arrondis 51 et l'anneau interne 48 a des sommets arrondis 53 qui correspondent chacun à une pale 2. Ainsi, l'axe d'un sommet arrondi 51 correspond à l'axe d'un sommet arrondi 53, qui correspondent l'un et l'autre à l'axe de l'ouverture 50 de la paroi mince 49 et à l'axe de la pale 2 correspondante. Dans le cas des figures 4 et 5, le rotor pour hélicoptère comporte quatre pales diamétralement opposées et montées dans un corps de moyeu 41 avec des anneaux 47 et 48 ayant une forme carrée à sommets arrondis 51 et 53 qui correspondent aux ouvertures 50 de la paroi mince 49.

Les butées sphériques lamifiées 5 qui constituent l'organe unique de retenue et d'articulation de chaque pale en battement, traînée et pas sont d'un type bien connu, et elles sont analogues à celles décrites précédemment. Elles comportent une partie centrale 15 associée à une armature rigide interne 16, et à une armature rigide externe 17. La partie centrale 15 est constituée par un empilement alterné de couches rigides qui sont généralement métalliques et de couches d'élastomère en forme de calotte sphérique. Cette partie centrale 15 est adhérisée d'une part en position radiale interne, sur la face convexe de la calotte sphérique de l'armature rigide externe 17, et d'autre part en position radiale externe sur la face concave de la calotte sphérique de l'armature rigide interne 16 de la butée sphérique lamifiée 5.

Chacune de ces butées sphériques lamifiées 5 est disposée entre l'anneau externe 47 et l'anneau interne 48, et elles sont fixées à ces anneaux par l'intermédiaire de leur armature rigide externe 17. Pour cela, l'anneau externe 47 comporte des alésages 52 et l'anneau interne 48 comporte des alésages 54. Ces alésages 52 et 54 sont disposés chacun dans la zone des ouvertures 50 aménagées dans la paroi mince 49. Chaque alésage 52 est situé sur l'axe de la pale 2 correspondante et il est réalisé dans un élargissement de l'anneau externe 47 ; et chaque alésage 54 est situé sur l'axe de la pale 2 correspondante et il est réalisé dans un élargissement de l'anneau interne 48. Chaque alésage 52 de l'anneau externe 47 fait face à un alésage 54 correspondant de l'anneau interne 48 de manière à pouvoir recevoir les moyens de fixation de l'armature rigide externe 17 de la butée sphérique lamifiée 5 correspondante. Les deux alésages 52 et 54 qui se font face, matérialisent ainsi un axe qui est sensiblement parallèle à l'axe du corps de moyeu 41. Chacun de ces axes est ainsi l'axe des moyens de fixation de chacune des butées sphériques lamifiées 5 correspondantes sur les anneaux externe 47 et interne 48.

Chacun des moyens de fixation des butées sphériques lamifiées 5 est constitué par une broche de liaison boulonnée 21, qui a un boulon 28 monté dans un axe cylindrique creux 22. L'axe cylindrique creux 22 comporte, à une des ses extrémités, une collerette 23. Cet axe cylindrique creux 22 est monté dans l'alésage 52 correspondant de l'anneau externe 47, dans un alésage 35 de l'armature externe 17 de la butée sphérique lamifiée 5 correspondante, et dans l'alésage 54 correspondant de l'anneau interne 48, la collerette 23 venant s'appliquer sur la face externe 42 de l'anneau externe 47. Le boulon 28 s'engage dans l'axe cylindrique creux 22, a une tête 29 qui s'applique sur la collerette 23, et a une autre extrémité filetée 30 sur laquelle s'engage un renfort métallique 72, un carénage 73, unerondelle 31 et un écrou freiné 32. La longueur sous la collerette 23 de l'axe cylindrique creux 22 est légèrement inférieure à la distance entre la face externe 42 de l'anneau externe 47 et la face externe 43 de l'anneau interne 48 de manière que l'écrou freiné 32 vienne bloquer l'ensemble en appliquant la rondelle 31 contre le carénage 73 de manière ce que le renfort métallique 72 s'applique sur la bordure de l'alésage 54 appartenant à la face externe 43 de l'anneau interne 48. De plus, chaque alésage 52 et 54, ménagés dans les anneaux 47 et 48, porte une douille 33 munie d'un épaulement 34. La douille 33 qui est montée dans l'alésage 52, a son épaulement 34 du côté de la face interne 45 de l'anneau externe 47, et la douille 33 qui est montée dans l'alésage 54, a son épaulement 34 du côté de la face interne 46 de l'anneau interne 48, de manière à ce que chaque épaulement 34 vienne s'appliquer sur l'armature externe 17 de la butée sphérique lamifiée 5 correspondante formant entretoise entre les deux anneaux 47 et 48.

Afin d'améliorer les caractéristiques de tenue en fatigue du corps de moyeu 41 selon l'invention, chaque anneau est entouré par une sangle 55 et 56 du type ceinture de renfort qui est engagée et montée dans un logement aménagé dans chacun de ces anneaux externe 47 et interne 48. Ce logement suit le contour de l'anneau correspondant et a une section polygonale qui est débouchante radialement à l'extérieur. Cette section est de forme rectangulaire et a sa longueur qui est sensiblement parallèle à l'axe du corps de moyeu 41. Dans une variante de réalisation de l'invention non représentée sur les figures, cette section pourrait également être carrée.

Afin de tirer le meilleur parti de cette disposition de ceinture de renfort, et d'améliorer au maximum les caractéristiques dites "fail-safe", ces ceintures de renfort sont en matériau composite. Plus précisément, ce matériau composite est constitué par des fibres unidirectionnelles à haute résistance mécanique qui sont soit minérales, soit synthétiques, et qui sont bobinées et agglomérées par une résine synthétique polymérisée à chaud. Plus précisément, ce matériau composite est constitué par des stratifils unidirectionnels d'aramide qui sont bobinés et agglomérés par une résine époxyde polymérisée à chaud. Dans une autre variante de réalisation, ce matériau composite est constitué par des rubans de fibres à haute résistance mécanique du type aramide, qui sont bobinés et agglomérés par de la résine synthétique polymérisable du type époxyde. Dans ces deux modes de réalisation, les sangles 55 et 56 forment une ceinture de renfort et de sécurité en fibres unidirectionnelles à haute résistance mécanique pré-imprégnées de résine synthétique polymérisable. Chacune de ces sangles 55 et 56 est réalisée par des stratifils ou des rubans qui sont constitués de telles fibres, et qui sont mis en place dans le logement 57 de l'anneau 47 et dans le logement 58 de l'anneau 48 par bobinage, la résine étant ensuite polymérisée à chaud. Dans une autre variante de l'invention, les sangles 55 et 56, formant ceinture de renfort et de sécurité, sont réalisées en fils métalliques par exemple en acier noyés dans un élastomère.

Dans le mode de réalisation de l'invention représenté sur les figures 4 et 5, chaque butée sphérique lamifiée 5 a son armature interne 16 qui est encastrée à l'intérieur d'une boucle rigide 18 constituant l'attache de la pale 2. Ainsi la pale 2, dans la zone d'emplanture, est aménagée dans une boucle rigide 18 de section rectangulaire qui constitue l'attache de la pale 2 et contourne de façon continue la butée sphérique lamifiée 5, et qui vient s'encastrer dans un logement 37 correspondant aménagé dans l'armature interne 16 de ladite butée. L'attache de la pale en forme de boucle rigide 18 est maintenue en place par une plaque 19 fixée sur l'armature interne 16 par des vis 20. Comme dans l'exemple précédent, la bouche rigide 18 est constituée par des stratifils.

Les organes de liaison entre le corps de moyeu rigide 41 selon l'invention et chacune des pales 2 sont constitués par des contrefiches de rappel élastique et d'amortissement de la pale en traînée, qui ne sont pas représentées sur la figure 5. Ces organes de liaison comportent également un dispositif de commande de pas qui est réalisé par un lever de commande de pas relié aux commandes du rotor. Dans le mode de réalisation représenté, ce levier de commande de pas est constitué par une chape 70, qui est montée sur une corne latérale 68 entre tes extrémités de deux plaques 59 et 60, dont l'une est montée sur le côté externe du pied de la pale 2, et dont l'autre est montée sur le côté interne de ce pied de pale 2.

La tête de rotor qui est équipée du corps de moyeu 41 selon l'invention comporte également des butées de battement constituées par une butée haute du type à appui direct, et par une butée basse du type escamotable. La butée haute est constituée par un patin 63, et la butée basse par un patin 64 de battement. Le patin 63 de battement est aménagé sur un bossage 61 qui est disposé sur la plaque 59 externe. Cette butée haute vient en appui direct, pour un angle de battement donné, sur l'anneau externe 47. La butée basse de battement est constituée par le patin 64 de butée basse qui est aménagé sur un levier, qui se monte entre deux oreilles 62, qui sont disposées sur la plaque 60 interne. Sous l'action de la force centrifuge, cette butée basse et son patin 64 pivotent à l'encontre d'un ressort de rappel non représenté autour d'un axe 65 qui est monté sur les deux oreilles 62. Cette butée basse 64 de battement vient en appui, pour un angle de battement négatif donné et pour une vitesse faible ou nulle du rotor, sur le renfort métallique 72 qui est fixé sur le pourtour de l'anneau interne 48 par l'intermédiaire de la broche de liaison boulonnée 21. Ce renfort métallique 72 est disposé en la face externe 43 de l'anneau interne 48, et le carénage 73 qui est tenu par la rondelle 31 de ladite broche de liaison 21. Ce renfort métallique 72 est conformé et il est coudé pour suivre le contour inférieur et vertical de l'anneau interne 48.

La tête de rotor qui est équipée d'un corps de moyeu 41 selon l'invention comporte également des butées de traînée 66 et 69, qui viennent en appui direct contre l'un au moins des anneaux externe 47 et interne 48, comme on peut le voir sur la figure 5, ces butées de traînée 66 et 69 sont aménagées à chacune des extrémités de la plaque correspondante 59 ou 60.

De plus, un dispositif prévoit l'immobilisation possible de chacune des butées sphériques lamifiées 5 en traînée. Pour cela, chacune des armatures externes 17 est immobilisée en traînée par deux vis de fixation 71, qui traversent l'anneau externe 47. On pourrait également prévoir que cette immobilisation se fasse par des vis de fixation qui traversent l'anneau interne 48.

La tête de rotor équipée du corps de moyeu 41 selon l'invention offre l'avantage d'avoir une structure qui libère la partie centrale du rotor, ce qui permet de ramener l'ensemble du dispositif avec les liaisons des pieds de pale plus près de l'axe du rotor. De ce fait, cet ensemble particulièrement ramassé permet de caréner l'ensemble de la tête de rotor, comme cela est représenté sur la figure 4, par le carénage 73 qui recouvre l'ensemble du dispositif. Ce carénage 73 entoure le corps de moyeu 41 et vient en dessous de chacun des pieds de pale 2. Dans cette configuration, ce carénage 73 peut se fixer dans la partie externe sur l'anneau externe 47 et venir s'amarrer à l'intérieur de l'anneau interne 48. Pour cela, le carénage 73 vient s'appliquer contre les renforts métalliques 72 par des trous dans lesquels s'engagent les extrémités filetées 30 des broches de liaison boulonnées 21.

Le corps de moyeu rigide 41 comporte un anneau extérieur 47 et un anneau intérieur 48 qui ont une forme cylindrique polygonale à sommets arrondis 51 et 53, dont chacun de ces sommets correspond à une pale 2. La paroi 49 quant à elle a une forme qui est cylindrique polygonale. Dans une variante de l'invention non représentée sur les figures, les anneaux externe 47 et interne 48 peuvent avoir une forme cylindrique circulaire.

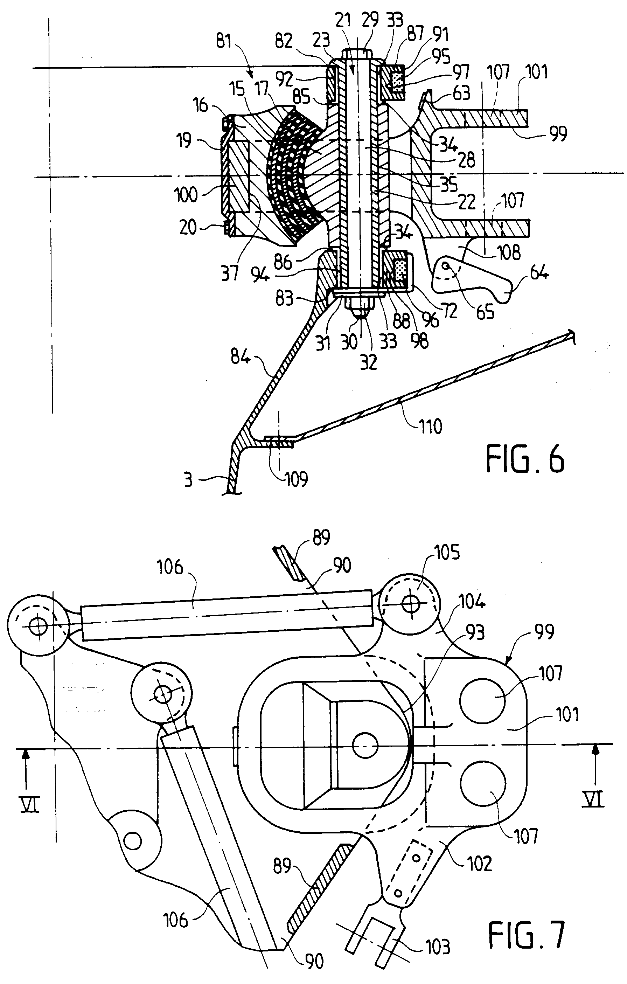

Les figures 6 et 7 se rapportent à une tête de rotor équipée d'un corps de moyeu 81 selon l'invention, qui a une structure analogue à ceux décrits précédemments, c'est-à-dire qu'il est métallique et monobloc avec une embase 84 et un mât 3 de rotor. Dans cette autre configuration de l'invention, les articulations de l'invention qui sont des butées sphériques lamifiées 5, sont raccordées à chacune des pales 2 correspondantes par un manchon intermédiaire monobloc 99. Dans cette architecture, te corps de moyeu 81 comporte un anneau externe 87 et un anneau interne 88 qui sont reliés l'un à l'autre par une paroi mince 89 de forme sensiblement cylindrique, qui est disposée à la périphérie de ces anneaux. Dans cette paroi mince 89 sont pratiquées des ouvertures 90 laissant passer les butées sphériques lamifiées 5 de telle sorte, que ne subsiste entre deux pales voisines 2 qu'un élément de la paroi mince 89 de liaison entre l'anneau externe 87 et l'anneau interne 88. Les deux anneaux 87 et 88 sont séparés l'un de l'autre par un espace suffisant de manière à avoir une distance qui permette de loger les butées sphériques lamifiées 5. Chacune de ces butées sphériques lamifiées 5 est reliée d'une part avec le pied de la pale 2 correspondante avec laquelle elle est solidaire en mouvement autour de trois axes perpendiculaires concourant au centre de la butée sphérique 5, et elle est d'autre part fixée à la périphérie des deux anneaux 87 et 88, de manière à constituer une entretoise rigide entre eux.

Dans l'exemple représenté sur les figures 6 et 7, le corps de moyeu 81 est relié à l'extrémité du mât 3 par l'intermédiaire de l'embase mince 84 de forme tronconique convergente vers l'extrémité du mât 3, de manière à relier l'anneau interne 88 du corps de moyeu 81 avec le mât 3 du rotor. L'embase mince 84 a sa grande base externe qui est solidarisée avec l'anneau interne 88 et elle a sa petite base interne qui est solidarisée avec l'extrémité du mât 3 de rotor, de manière à former un seul ensemble monobloc.

L'anneau externe 87 et l'anneau interne 88 sont semblables et ont une forme cylindrique polygonale avec des sommets arrondis. L'anneau externe 87 a des sommets arrondis 91 et l'anneau interne 88 a des sommets arrondis 93 qui correspondent chacun à une pale 2. Ainsi, l'axe d'un sommet arrondi 91 correspond à l'axe d'un sommet arrondi 93, qui correspondent l'un et l'autre à l'axe de l'ouverture 90 de la paroi mince 89 et à l'axe de la pale 2 correspondante. Dans le cas des figures 6 et 7, le rotor pour héticoptère comporte quatre pales diamétralement opposées et montées dans un corps de moyeu 81 avec des anneaux ayant une forme carrée à sommets arrondis 91 et 93 qui correspondent aux ouvertures 90 de la paroi mince 89.

Les butées sphériques lamifiées 5 qui constituent l'organe unique de retenue d'articulation de chaque pale en battement, traînée et pas sont d'un type analogue aux butées décrites dans les systèmes précédents. Ces butées comportent une partie centrale 15 associée à une armature rigide interne 16, et à une armature rigide externe 17. La partie centrale 15 est constituée par un empilement alterné de couches rigides qui sont généralement métalliques et de couches d'élastomère en forme de calotte sphérique. Cette partie centrale 15 est adhérisée d'une part en position radiale interne, sur la face convexe de la calotte sphérique de l'armature rigide externe 17, et d'autre part en position radiale externe sur la face concave de la calotte sphérique de l'armature rigide interne 16 de la butée sphérique lamifiée 5.

Chacune de ces butées sphériques lamifiées 5 est disposée entre l'anneau externe 87 et l'anneau interne 88, et elles sont fixées à ces anneaux par l'intermédiaire de leur armature rigide externe 17. Pour cela, l'anneau externe 87 et l'anneau interne 88 comporte des alésages 92 et 94. Ces alésages 92 et 94 sont disposés chacun dans la zone des ouvertures 90 aménagées dans la paroi mince 89. Chaque alésage 92 est situé sur l'axe de la pale 2 correspondante et il est réalisé dans un élargissement de l'anneau externe 87 ; et chaque alésage 94 est situé sur l'axe de la pale 2 correspondante et il est réalisé dans un élargissement de l'anneau interne 88. Chaque alésage 92 de l'anneau externe 87 fait face à un alésage 94 correspondant de l'anneau interne 88 de manière à pouvoir recevoir les moyens de fixation de l'armature rigide externe 17 de la butée sphérique lamifiée 5 correspondante. Les deux alésages 92 et 94 qui se font face, matérialisent ainsi un axe qui est sensiblement parallèle à l'axe du corps de moyeu 81. Chacun de ces axes est ainsi l'axe des moyens de fixation de chacune des butées sphériques lamifiées 5 correspondantes sur les anneaux externe 87 et interne 88.

Comme dans les systèmes précédemment décrits, les moyens de fixation de chacune des butées sphériques lamifiées 5 sont constitués par une broche de liaison boulonnée 21, qui comprend un boulon 28 monté dans un axe cylindrique creux 22. L'axe cylindrique creux 22 comporte, à une des ces extrémités, une collerette 23. Cet axe cylindrique creux 22 est monté dans l'alésage 92 correspondant de l'anneau externe 87, dans un alésage 35 de l'armature externe 17 de la butée sphérique lamifiée 5 correspondante, et dans l'alésage 94 correspondant de l'anneau interne 88, la collerette 23 venant s'appliquer sur la face externe 82 de l'anneau externe 87. Le boulon 28 s'engage dans l'axe cylindrique creux 22, a une tête 29 qui s'applique sur la collerette 23, et a une autre extrémité filetée 30 sur laquelle s'engage un renfort métallique 72, une rondelle 31 et un écrou freiné 32. La longueur sous la collerette 23 de l'axe cylindrique creux 22 est légèrement inférieure à la distance entre la face externe 82 de l'anneau externe 87 et la face externe 83 de l'anneau interne 88 de manière que l'écrou freiné 32 vienne bloquer l'ensemble en appliquant la rondelle 31 contre le renfort métallique 72 qui s'applique sur la bordure de l'alésage 94 appartenant à la face externe 83 de l'anneau interne 88. De plus, chaque alésage 92 et 94, ménagés dans les anneaux 87 et 88, porte une douille 33 munie d'un épaulement 34. La douille 33 qui est montée dans l'alésage 92, a son épaulement 34 du côté de la face interne 85 de l'anneau externe 87, et la douille 33 qui est montée dans l'alésage 94, a son épaulement 34 du côté de la face interne 86 de l'anneau interne 88, de manière à ce que chaque épaulement 34 vienne s'appliquer sur l'armature externe 17 de la butée sphérique lamifiée 5 correspondante formant entretoise entre les deux anneaux.

Afin d'améliorer les caractéristiques du corps de moyeu 81 selon l'invention, notamment les caractéristiques de tenue à la fatigue, chaque anneau est entouré par une sangle d'une manière analogue à celle qui a été décrite dans le mode de réalisation précédent représenté sur les figures 4 et 5. L'anneau externe 87 comporte une sangle 95 qui est montée dans un logement 97 aménagé dans cet anneau. De la même façon, l'anneau interne 88 comporte une sangle 96 qui est montée dans un logement 98 aménagé dans cet anneau. Chacun de ces logements 97 et 98 suit le contour de l'anneau correspondant et a une section polygonale qui est débouchante radialement à l'extérieur. Cette section est de forme rectangulaire et a sa longueur qui est sensiblement parallèle à l'axe du corps de moyeu 81. Sans sortir du cadre de l'invention, cette section pourrait également être carrée.

Comme dans le mode de réalisation relatif aux figures 4 et 5 décrites précédemment, les sangles 95 et 96 formant ceinture de renfort et de sécurité sont en un matériau composite. Les sangles 95 et 96 sont réalisées par des stratifils ou des rubans, qui sont constitués de fibres unidirectionnelles à haute résistance mécanique pré-imprégnés de résine synthétique polymérisable. Ils sont mis en place dans les logements 97 et 98 des anneaux 87 et 88 par bobinage, la résine étant ensuite polymérisée à chaud. Egalement, dans une variante de l'invention, les sangles 95 et 96 formant ceinture de sécurité et de renfort sont réalisées en fils métalliques par exemple en acier noyés dans un élastomère.

Dans le mode de réalisation de l'invention représenté sur les figures 6 et 7, l'attache de la pale 2 est en forme de boucle rigide qui contourne de façon continue la butée sphérique lamifiée 5 en s'encastrant dans ladite butée. Cette attache de la pale 2 est constituée par le manchon intermédiaire monobloc 99, qui est conformé du côté de l'axe rotor en un étrier 100 de section rectangulaire, et qui est conformé du côté opposé en une chape double 101 reliée à la pale 2 correspondante. L'étrier 100 forme ainsi la boucle d'attache de la pale 2 et il vient s'encastrer dans un logement 37 correspondant aménagé dans l'armature interne 16 de la butée sphérique lamifiée correspondante. L'attache de la pale 2 en forme d'étrier 100 est maintenue en place par une plaque 19 qui est fixée sur l'armature interne 16 par des vis 20. La chape double 101 coopère avec des moyens de solidarisation du pied de la pale 2 correspondante. Ces moyens de solidarisation sont représentés sur les figures par des axes sensiblement parallèles à l'axe du rotor, et ils sont matérialisés par des trous 107 aménagés sur les branches de la chape double 101.

Le manchon intermédiaire monobloc 99 comporte également une corne 102 munie à son extrémité d'une chape 103 reliée aux commandes du rotor. Le manchon intermédiaire 99 comporte de plus, de l'autre côté de la corne 102 une attache à rotule 104 pour l'extrémité d'une contrefiche 106 de rappel élastique et d'amortissement de la pale 2 en traînée. Chaque contrefiche 106 de rappel élastique et d'amortissement de la pale 2 en traînée traverse l'ouverture 90 correspondante, pour être rattachée au corps de moyeu 81 dans la zone centrale interne. Les deux séries de trous 107 reçoivent des broches qui pénètrent dans le pied de pale 2 correspondante, de manière à amarrer celle-ci à ce manchon intermédiaire 99. Ce dispositif présente l'avantage de permettre en désolidarisant une des deux broches, de rabattre au repos les pales 2 vers l'axe de la tête de rotor.

La tête de rotor qui est équipée du corps de moyeu 81 selon l'invention comporte également des butées de battement constituées par une butée haute du type à appui direct, et par une butée basse du type escamotable. La butée haute de battement comporte un patin 63 qui est aménagé sur un bossage de la branche externe de la chape double 101. Cette butée haute vient en appui direct, pour un angle de battement positif donné, sur l'anneau externe 87. La butée basse de battement est constituée par un patin 64 aménagé sur un levier qui se monte entre deux oreilles 108, qui sont disposées sur la branche interne de la chape double 101. Cette butée basse et son patin 64 pivotent sous l'action de la force centrifuge et à l'encontre d'un ressort non représenté autour d'un axe 65 qui est monté sur les deux oreilles 108. Cette butée basse 64 de battement vient en appui, pour un angle de battement négatif donné et une vitesse de rotation faible ou nulle du rotor, sur le renfort métallique 72 fixé sur le pourtour de l'anneau interne 88. Le renfort métallique 72 est monté sur l'anneau interne 88 par l'intermédiaire de la broche de liaison boulonnée 21, et il est disposé entre la face externe 83 dudit anneau interne 88 et la rondelle 31 de ladite broche de liaison 21. Ce renfort métallique 72 est conformé et il est coudé pour suivre le contour interne et latéral de l'anneau interne 88. Le dispositif particulièrement ramassé de l'invention permet de caréner l'ensemble de la tête de rotor. Un carénage 110 recouvre l'ensemble du dispositif, entoure et vient à l'intérieur de chacun des pieds de pale 2. Dans cette configuration, le carénage 110 peut se fixer sur une collerette 109 aménagée à l'extérieur de la petite base de l'embase 84.

Le corps de moyeu 81 comporte un anneau externe 87 et un anneau interne 88, qui ont une forme cylindrique polygonale à sommets arrondis 91 et 93, dont chacun de ces sommets correspond à une pale donnée. De plus, dans ce mode de réalisation de l'invention, la paroi mince 89 a une forme qui est sensiblement cylindrique polygonale. Dans une variante de l'invention non représentée sur les figures, les anneaux 87 et 88 et la paroi mince 89 peuvent avoir une forme cylindrique circulaire.

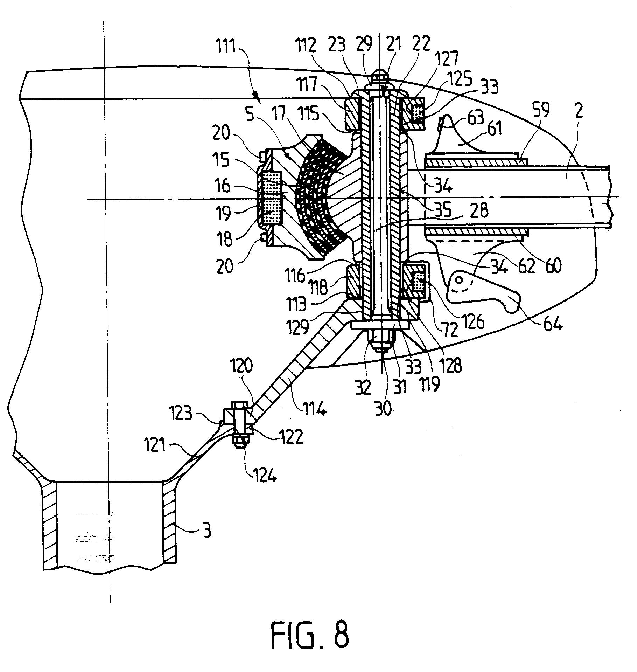

Dans la réalisation représentée sur la figure 8, le corps de moyeu 111 est métallique et relié au mât 3 du rotor par une embase 114 métallique, qui est une pièce séparée. Le corps de moyeu 111 comporte un anneau externe 117, et un anneau interne 118 qui sont reliés l'un à l'autre par une paroi mince non représentée sur la figure. Dans cette paroi mince sont pratiquées des ouvertures laissant passer les butées sphériques lamifiées 5.

Les butées sphériques lamifiées 5 qui constituent l'organe unique de retenue d'articulation de chaque pale en battement, traînée et pas sont d'un type analogue à ceux décrits précédemment. Chaque butée sphérique lamifiée 5 comporte une partie centrale 15 associée à une armature rigide interne 16 et à une armature rigide externe 17. Chacune de ces butées sphériques lamifiées 5 est disposée entre l'anneau externe 117 et l'anneau interne 118, et elles sont fixées à ces anneaux par l'intermédiaire de leur armature rigide externe 17. Comme cela a été décrit dans les exemples précédents, l'anneau externe 117 et l'anneau interne 118 comportent des alésages qui sont disposés dans la zone des ouvertures aménagées dans la paroi mince, et qui matérialisent un axe sensiblement parallèle à l'axe du corps de moyeu, qui est l'axe des moyens de fixation de l'armature rigide externe 17 de la butée sphérique lamifiée 5 correspondante.

L'embase 114 a une forme tronconique avec une paroi mince dont la grande base 119 externe est solidarisée avec l'anneau interne 118 par l'intermédiaire des moyens de fixation de chacune des butées sphériques lamifiées 5. L'embase 114 comporte également à son autre extrémité une petite base interne 120 qui est raccordée à l'extrémité tronconique divergente 121 du mât 3. Pour cela, la petite base 120 de l'embase 114 se place sur une bride 122 qui appartient à l'extrémité tronconique divergente 121 du mât 3. La bride 122 comporte également une collerette de centrage 123 interne, qui permet d'assurer la mise en place correcte de la petite base 120 de l'embase 114. L'embase 114 est solidarisée avec le mât 3 par l'intermédiaire de boulons de fixation 124 qui bloquent la petite base 120 contre la bride 122 du mât 3.

Les moyens de fixation de chacune des butées sphériques lamifiées 5 sont constitués par une broche de liaison boulonnée 21 analogue à celle décrite précédemment et qui a un boulon 28 monté dans un axe cylindrique creux 22. L'axe cylindrique creux 22 comporte, à une de ses extrémités, une collerette 23 et il est monté dans un alésage correspondant de l'anneau externe 117, dans un alésage 35 de l'armature externe 17 de la butée sphérique lamifiée 5 correspondante et dans un alésage correspondant de l'anneau interne 118, la collerette 23 venant s'appliquer sur la face externe 112 de l'anneau externe 117. Le boulon 28 s'engage dans l'axe cylindrique creux 22, a une tête 29 qui s'applique sur la collerette 23, et a une autre extrémité filetée 30 sur laquelle s'engage la grande base externe 119 de l'embase 114 par l'intermédiaire d'un alésage 129 aménagé dans cette embase 114. Une rondelle 31 et un écrou freiné 32 s'engagent enfin sur l'extrémité filetée 30 pour serrer l'ensemble. La longueur sous la collerette 23 de l'axe cylindrique creux 22 est légèrement inférieure à la distance entre la face externe 112 de l'anneau externe 117 et la face interne de la grande base 119, de manière que l'écrou freiné 32 vienne bloquer l'ensemble en appliquant la rondelle 31 contre la grande base 119 de l'embase 114. Ainsi, la face externe de la grande base 119 vient s'appliquer contre la face externe 113 de l'anneau interne 118. De plus, chaque alésage ménagé dans les anneaux 117 et 118, porte une douille 33 munie d'un épaulement 34, qui est montée respectivement sur la face interne 115 de l'anneau externe 117 et sur la face interne 116 de l'anneau interne 118, de façon à venir s'appliquer sur l'armature 17 de la butée sphérique lamifiée 5 formant entretoise entre les deux anneaux 117 et 118.

Dans le mode de réalisation de l'invention représenté sur la figure 8, chaque butée sphérique lamifiée 5 a son armature interne 16 qui est encastrée à l'intérieur d'une boucle rigide 18 constituant l'attache de la pale 2. Ainsi la pale, dans la zone d'emplanture, est aménagée en une bouche rigide 18 de section rectangulaire, qui constitue l'attache de la pale 2 et contourne de façon continue la butée sphérique lamifiée 5, et qui vient s'encastrer dans un logement 37 correspondant aménagé dans l'armature interne 16 de ladite butée. L'attache de la pale 2 en forme de bouche rigide 18 est maintenue en place par une plaque 19 fixée sur l'armature interne 16 par des vis 20. La boucle rigide 18 est constituée de stratifils analogues à ceux décrits précédemment.

Afin d'améliorer les caractéristiques de résistance à la fatigue du corps de moyeu 111 selon l'invention, chaque anneau 117 et 118 est entouré par une sangle 125 et 126. La sangle 125 est montée dans un logement 127 de l'anneau externe 117, et la sangle 126 est montée dans un logement 128 de l'anneau interne 118. Chaque logement 127 et 128 suit le contour de l'anneau correspondant et a une section polygonale qui est débouchante radialement à l'extérieur. Cette section est de forme rectangulaire et a sa longueur qui est sensiblement parallèle à l'axe du corps de moyeu rigide 111. Dans une variante de réalisation de l'invention, cette section pourrait être carrée.

Chacune de ces sangles 125 et 126 est en matériau composite avec une structure analogue à celle qui a été décrite pour les modes de réalisation représentés sur les figures 4 et 6. De la même façon, chacune de ces sangles 125 et 126 peut être réalisée en fils métalliques par exemple en acier noyés dans un élastomère.

La tête de rotor qui est équipée du corps de moyeu rigide 111 selon l'invention comporte également des butées de battement constituées par une butée haute du type à appui direct et par une butée basse du type escamotable, et elles sont analogues aux butées de battement décrites dans le mode de réalisation de l'invention représenté sur la figure 4. La butée haute de battement comporte un patin 63 qui est aménagé sur un bossage 61 disposé sur une des plaques 59 de la pale 2. Cette butée haute vient en appui direct, pour un angle de battement positif donné, sur l'anneau externe 117. Le patin 64 de butée basse de battement est aménagé sur un levier qui se monte entre deux oreilles 62, qui sont disposées en dessous de l'autre plaque 60 interne de la pale 2. Cette butée basse et son patin 64 pivotent sous l'action de la force centrifuge et à l'encontre d'un ressort non représenté autour d'un axe 65 qui est monté sur les deux oreilles 62. Cette butée basse 64 de battement vient en appui, pour un angle de battement négatif donné et à une vitesse de rotation faible ou nulle du rotor, sur un renfort métallique 72 fixé sur le pourtour de l'anneau interne 118.

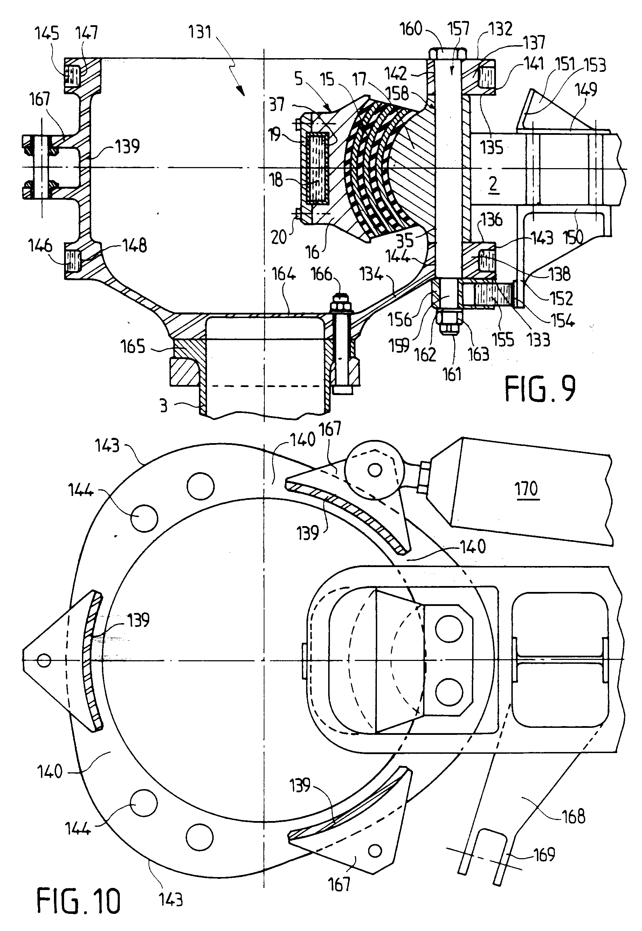

Les figures 9 et 10 représentent un mode de réalisation de l'invention où le corps de moyeu 131 de rotor de giravion est métallique et monobloc avec une embase 134 de liaison avec le mât 3 de rotor. Ce corps de moyeu peut être réalisé par exemple en alliage d'aluminium à partir d'une ébauche matricée qui est ensuite tournée et fraisée pour obtenir la forme extérieure et intérieure avec la précision nécessaire pour la liaison avec le mât d'une part et avec les organes de liaison aux pales d'autre part. Le corps de moyeu 131 est du type où chaque pale 2 du rotor est relié à ce corps par des articulations sous forme de butées sphériques lamifiées 5, et des organes de liaison. Dans cette architecture, le corps de moyeu 131 comporte un anneau externe 137 et un anneau interne 138 qui sont reliés l'un à l'autre par une paroi mince 139. Dans cette paroi mince 139 sont pratiquées des ouvertures 140 laissant passer chacune des butées sphériques lamifiées 5 avec l'attache de la pale 2 correspondante, de telle sorte que ne subsiste entre deux pales voisines 2 qu'un élément de la paroi mince 139 de liaison entre l'anneau externe 137 et l'anneau interne 138. Les deux anneaux 137 et 138 sont séparés l'un de l'autre par un espace suffisant de manière à avoir une distance qui permette de loger les butées sphériques lamifiées 5. Chacune de ces butées sphériques lamifiées 5 est reliée d'une part avec le pied de la pale 2 correspondante avec laquelle elle est solidaire en mouvement autour de trois axes perpendiculaires concourant au centre de la butée sphérique 5, et elle est d'autre part fixée aux deux anneaux 137 et 138, à la périphérie de ces anneaux, de manière à constituer une entretoise rigide entre eux. La paroi mince 139 est de forme sensiblement cylindrique circulaire et elle est disposée à la périphérie des anneaux 137 et 138. Les ouvertures 140 ont des dimensions suffisantes pour permettre le passage de la butée sphérique lamifiée 5 avec l'attache de la pale 2 correspondante.

Le corps de moyeu 131 est relié à l'extrémité du mât 3 de rotor par l'intermédiaire de l'embase 134 mince de forme tronconique convergente vers l'extrémité du mât 3, de manière à relier l'anneau interne 138 du corps de moyeu 131 avec le mât 3 de rotor. L'embase mince 134 a sa grande base externe qui est solidarisée et intégrée avec l'anneau interne 138 et sa petite base interne 164 qui est solidarisée avec l'extrémité du mât 3 par des boulons 166. L'extrémité du mât 3 est constituée par une bride 165 sur laquelle vient s'appliquer la face d'appui de la petite base 164 de l'embase 134. La bride 165 et la petite base 164 comportent des séries de trous disposés circulairement de manière à pouvoir recevoir les boulons 166 qui solidarisent la petite base 164 avec la bride 165, c'est-à-dire qui solidarisent le corps de moyeu 131 avec le mât 3 du rotor.

L'anneau externe 137 et l'anneau interne 138 sont semblables et ont une forme cylindrique polygonale avec des sommets arrondis. L'anneau externe 137 a des sommets arrondis 141 et l'anneau interne 138 a des sommets arrondis 143 qui correspondent chacun à une pale 2. Ainsi, l'axe d'un sommet arrondi 141 correspond à l'axe d'un sommet arrondi 143, qui correspondent l'un et l'autre à l'axe de l'ouverture 140 de la paroi mince 139 et à l'axe de la pale 2 correspondante. Dans le cas des figures 9 et 10, le rotor pour hélicoptère comporte trois pales disposées à 120° les unes des autres par rapport à l'axe du rotor, et montées dans le corps de moyeu 131 avec des anneaux 137 et 138 ayant une forme triangulaire à sommets arrondis 141 et 143 qui correspondent aux ouvertures 140 de la paroi mince 139.

Les butées sphériques lamifiées 5 qui constituent l'organe unique de retenue d'articulation de chaque pale 2 en battement, traînée et pas sont d'un type analogue à celles décrites dans les modes de réalisation précédents et elles comportent une partie centrale 15 associée à une armature rigide interne 16, et à une armature rigide externe 17. Chacune de ces butées sphériques lamifiées 5 est disposée entre l'anneau externe 137 et l'anneau interne 138 et elles sont fixées à ces anneaux par l'intermédiaire de leur armature rigide externe 17. Pour cela, l'anneau externe 137 comporte des alésages 142 et l'anneau interne 138 comporte des alésages 144. Ces alésages 142 et 144 sont disposés chacun dans la zone des ouvertures 140 aménagées dans la paroi mince 139. Chaque alésage 142 est situé sur l'axe de la pale 2 correspondante et il est réalisé dans un élargissement de l'anneau externe 137 ; et chaque alésage 144 est situé sur l'axe de la pale 2 correspondante et il est réalisé dans un élargissement de l'anneau interne 138. Chaque alésage 142 de l'anneau externe 137 fait face à un alésage 144 correspondant de l'anneau interne 138 de manière à pouvoir recevoir les moyens de fixation de l'armature rigide externe 17 de la butée sphérique lamifiée 5 correspondante. Les deux alésages 142 et 144 qui se font face, matérialisent ainsi un axe qui est sensiblement parallèle à l'axe du corps de moyeu. Chacun de ces axes est ainsi l'axe des moyens de fixation de chacune des butées sphériques lamifiées 5 correspondantes sur les anneaux externe 137 et interne 138.

Les moyens de fixation de chacune des butées sphériques lamifiées 5 sont constitués par deux broches de liaisons boulonnées 157. Chaque broche de liaison boutonnée 157 comporte un boulon 159 qui est monté dans un axe cylindrique creux 158. L'axe cylindrique creux 158 est lui-même monté dans l'alésage 142 correspondant de l'anneau externe 137, dans un des deux alésages 35 de l'armature externe 17 de la butée sphérique lamifiée 5 correspondante, et dans l'alésage 144 correspondant de l'anneau interne 138. Le boulon 159 s'engage dans l'axe cylindrique creux 158, a une tête 160 qui s'applique sur la face externe 132 de l'anneau externe 137, et a une autre extrémité filetée 161 sur laquelle s'engage un étrier 156, une rondelle 162 et un écrou freiné 163. La longueur de l'axe cylindrique creux 158 est légèrement inférieure à la distance entre la face externe 132 de l'anneau externe 137 et la face externe 133 de l'anneau interne 138 de manière que l'écrou freiné 163 vienne bloquer l'ensemble en appliquant la rondelle 162 sur l'étrier 156, qui vient s'appliquer contre la face externe 133 de l'anneau interne 138. Chacune des faces internes 135 de l'anneau externe 137, et des faces internes 136 de l'anneau interne 138 vient s'appliquer sur l'armature externe 17 de la butée sphérique lamifiée 5 correspondante formant entretoise entre les deux anneaux 137 et 138.

Afin d'améliorer les caractéristiques du corps de moyeu 131, notamment les caractéristiques de tenue en fatigue, l'anneau externe 137 est entouré par une sangle 145 du type ceinture de renfort, et l'anneau interne 138 est entouré par une sangle 146 qui est également du type ceinture de renfort. La sangle 145 est montée dans un logement 147 de l'anneau externe 137 et la sangle 146 est montée dans un logement 148 aménagé dans l'anneau interne 138. Chacun de ces logements 147 et 148 suit le contour de l'anneau correspondant et il a une section polygonale qui est débouchante radialement à l'extérieur. Cette section est de forme rectangulaire et elle a sa longueur qui est sensiblement parallèle à l'axe du corps de moyeu 131. Dans une variante de réalisation de l'invention non représentée sur les figures, cette section pourrait être carrée.

Afin de tirer te meilleur parti de cette disposition de cette ceinture de renfort, et d'améliorer au maximum les caractéristiques dites "fail-safe", ces ceintures de renfort sont en matériau composite, et elles ont une structure et une composition analogues aux sangles décrites dans les modes de réalisation précédents. Chacune de ces sangles 145 et 146 formant ceinture de renfort et de sécurité est en fibres unidirectionnelles à haute résistance mécanique pré-imprégnées de résine synthétique polymérisable. Ces sangles 145 et 146 sont réalisées par des stratifils ou des rubans constitués de telles fibres qui sont mis en place sur chaque anneau 137 et 138 par bobinage, la résine étant ensuite polymérisée à chaud. Dans une variante de l'invention, chacune de ces sangles 145 et 146 formant ceinture de sécurité et de renfort est réalisée en fils métalliques par exemple en acier noyés dans un élastomère.

Dans le mode de réalisation de l'invention représenté sur les figures 9 et 10, chaque butée sphérique lamifiée 5 a son armature interne 16, qui est encastrée à l'intérieur d'une boucle rigide 18 constituant l'attache de la pale 2. Ainsi la pale 2, dans la zone d'emplanture, est aménagée en une boucle rigide 18 de section rectangulaire qui constitue l'attache de la pale et contourne de façon continue la butée sphérique lamifiée 5, et qui vient s'encastrer dans un logement 37 correspondant aménagé dans l'armature interne 16 de ladite butée. L'attache de la pale 2 en forme de boucle rigide 18 est maintenue en place par une plaque 19 fixée sur l'armature interne 16 par des vis 20. La boucle rigide 18 est constituée de stratifils. Chaque stratifil est réalisé par un ensemble de fils de base, de filaments ou de fibres synthétiques ou minérales à haute résistance mécanique, par exemple de verre, qui sont enduits et agglomérés parallèlement en un faisceau par une résine synthétique durcie. Cette boucle rigide 18 se prolonge dans la partie courante de la pale 2 formant progressivement le longeron résistant, au bord d'attaque, ainsi que les éléments du bord de fuite. Les organes de liaison entre le corps de moyeu 131 selon l'invention et chacune des pales 2 sont constitués par des contrefiches 170 de rappel élastique et d'amortissement de la pale 2 en traînée, et un dispositif de commande de pas qui est réalisé par un levier de commande de pas relié aux commandes du rotor. Dans le mode de réalisation représenté, ce levier de commande de pas est constitué par une chape 169, qui est montée à l'extrémité d'une corne latérale 168 appartenant aux deux plaques de serrage 149 et 150 de la pale 2. La plaque de serrage 149 est montée à l'extérieur de la pale correspondante 2, et la plaque de serrage 150 est disosée à l'intérieur de cette même pale 2, de manière à être assemblées l'une par rapport à l'autre.

Chacune des contrefiches 170 de rappel élastique et d'amortissement de la pale 2 en traînée relie le pied de la pale 2 correspondante à la périphérie du corps de moyeu 131. Pour cela, chacune des extrémités des contrefiches 170 vient s'accrocher à l'élément de paroi mince 139 correspondant par l'intermédiaire d'une chape 167 qui est intégrée audit élément de paroi mince 139.

La tête de rotor qui est équipée du corps de moyeu rigide 131 selon l'invention comporte également des butées de battement constituées par une butée haute du type à appui direct, et par une butée basse du type escamotable. Un patin 153 de butée haute est aménagé sur un bossage 151 qui est disposé sur la plaque de serrage 149. Cette butée haute vient en appui direct, pour un angle de battement positif donné, sur l'anneau externe 137. Un patin 154 de butée basse de battement est aménagé également sur un bossage 152 qui est aménagé sur la plaque de serrage 150 de la pale 2. Un anneau réciproque 155 rigide est maintenu en place sous l'anneau interne 138 du corps de moyeu 131 par des étriers 156 qui sont maintenus en place au moyen des broches de liaison boulonnées 157. Ces étriers 156 sont disposés de manière à laisser à l'anneau réciproque 155 une possibilité de débattement limitée dans son propre plan. La butée basse de battement vient ainsi en appui pour un angle de battement négatif donné sur la périphérie de l'anneau réciproque 155.

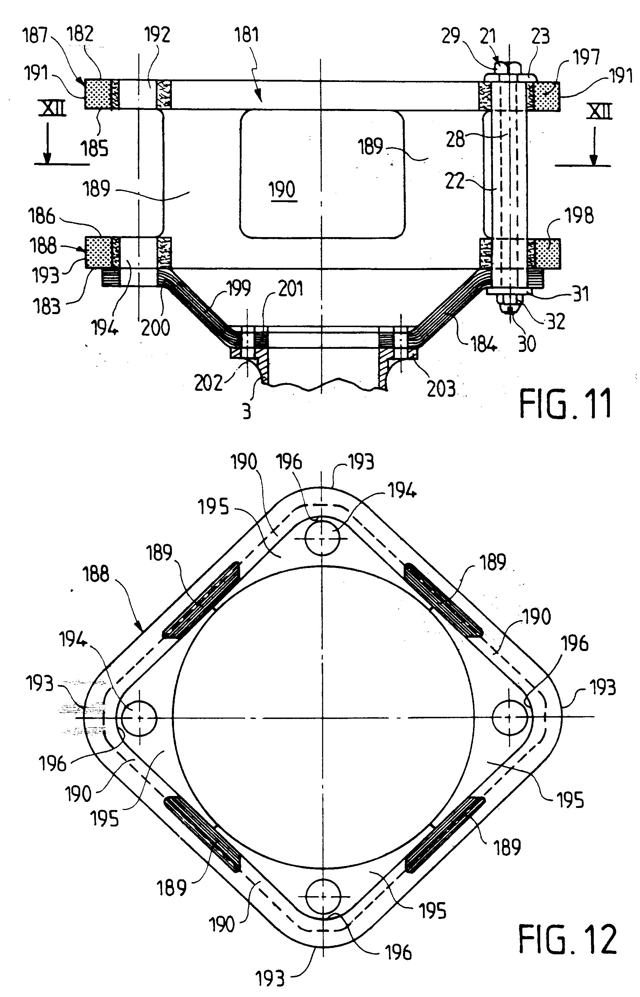

Les figures 11 et 12 représentent un mode de réalisation de l'invention où le corps de moyeu 181 de rotor de giravion est en matériau composite et relié au mât 3 du rotor par une embase 184 également en matériau composite. Dans cette architecture, le corps de moyeu 181 comporte un anneau externe 187 et un anneau interne 188 qui sont reliés l'un et l'autre par une paroi mince 189. Dans cette paroi mince 189 sont pratiquées des ouvertures 190 laissant passer les articulations des pales constituées par des butées sphériques lamifiées non représentées sur les figures. La paroi mince 189 est aménagée de telle sorte que ne subsiste entre deux pales voisines qu'un élément de la paroi mince 189 de liaison entre l'anneau externe 187 et l'anneau interne 188.

Dans la réalisation représentée sur les figures 11 et 12, le corps de moyeu rigide 181 est relié au mât 3 de rotor par une embase 184 qui est une pièce séparée. Cette embase 184 a une partie 199 de forme tronconique, dont l'une des extrémités est une grande base externe 200, et dont l'autre extrémité est une petite base interne 201. La grande base 200 s'applique contre la face externe 183 de l'anneau interne 188, et elle est solidarisée avec l'anneau interne 188 par les moyens de fixation des butées sphériques lamifiées avec chacun des anneaux externe 187 et interne 188. A l'autre extrémité de l'embase 184, la petite base interne 201 est raccordée à l'extrémité tronconique divergente du mât 3 de rotor. Cette liaison est assurée par un ensemble de boulons 202 qui raccordent une bride 203 disposée à l'extrémité du mât 3 de rotor, et la petite base 201 de l'embase 184.

L'anneau externe 187 et l'anneau interne 188 sont semblables et ont une forme cylindrique polygonale avec des sommets arrondis qui correspondent chacun à une pale. Ainsi, l'axe d'un sommet arrondi correspond à l'axe de l'ouverture 190 de la paroi mince 189 et à l'axe de la pale correspondante. Dans le cas des figures 11 et 12, le rotor pour hélicoptère comporte quatre pales diamétralement opposées et montées dans un corps de moyeu 181 avec des anneaux ayant une forme carrée à sommets arrondis qui correspondent aux ouvertures 190 de la paroi mince 189. Dans une variante de l'invention non représentée sur les figures, les anneaux et la paroi mince peuvent avoir une forme cylindrique circulaire. Chacune des butées sphériques lamifiées, non représentées sur les figures, est disposée entre l'anneau externe 187 et l'anneau interne 188 et elles sont fixées à ces anneaux. Pour cela, l'anneau externe 187 comporte des alésages 192 et l'anneau interne 188 comporte des alésages 194. Ces alésages 192 et 194 sont disposés chacun dans la zone des ouvertures 190 aménagées dans la paroi mince 189. Chaque alésage 192 est situé sur l'axe de la pale correspondante et est réalisé dans un élargissement de l'anneau externe 187 ; et chaque alésage 194 est situé sur l'axe de la pale correspondante et est réalisé dans un élargissement de l'anneau interne 188. Chaque alésage 192 de l'anneau externe 187 fait face à un alésage 194 correspondant de l'anneau interne 188 de manière à pouvoir recevoir les moyens de fixation de la butée sphérique lamifiée correspondante. Les deux alésages 192 et 194 qui se font face, matérialisent ainsi un axe qui est sensiblement parallèle à l'axe du corps de moyeu 181. Chacun de ces axes est ainsi l'axe des moyens de fixation de chacune des butées sphériques lamifiées correspondantes sur les anneaux externe 187 et interne 188.

Les moyens de fixation de chacune des butées sphériques lamifiées sont constitués par une broche de liaison boulonnée 21 qui comporte un boulon 28 monté dans un axe cylindrique creux 22. L'axe cylindrique creux comporte, à une de ses extrémités, une collerette 23 et il est monté dans l'alésage 192 correspondant de l'anneau externe 187, dans un alésage de la butée sphérique lamifiée correspondante, non représentée sur la figure 11, et dans l'alésage 194 correspondant de l'anneau interne 188, la collerette 23 venant s'appliquer sur la face externe 182 de l'anneau externe 187. Le boulon 28 s'engage dans l'axe cylindrique creux 22, a une tête 29 qui s'applique sur la collerette 23, et a une autre extrémité filetée 30 sur laquelle s'engage la grande base 200 de l'embase 184 par l'intermédiaire de trous, une rondelle 31 et un écrou freiné 32. La longueur sous la collerette 23 de l'axe cylindrique creux 22 est légèrement inférieure à la distance entre la face externe 182 de l'anneau externe 187 et la face interne de la grande base 200 de l'embase 184, de manière que l'écrou freiné 32 vienne bloquer l'ensemble en appliquant la rondelle 31 sur la grande base 200 de l'embase 184 qui s'applique sur la face externe 183 de l'anneau interne 188. La face interne 185 de l'anneau externe 187 et la face interne 186 de l'anneau interne 188 viennent s'appliquer respectivement sur la butée sphérique lamifiée correspondante formant ainsi entretoise entre les deux anneaux.

Dans la structure du corps de moyeu 181 en composite, chaque anneau supérieur 187 et anneau inférieur 188 est constitué par autant de pièces plates 195 identiques ou'il y a de pales. Ainsi dans le cas des figures 11 et 12, chaque anneau 187 et 188 comporte quatre pièces plates 195 identiques. Ces pièces plates sont juxtaposées l'une contre l'autre de manière à former, en un ensemble continu, une ossature. Les pièces plates 195 ont un coin extérieur arrondi 196, et elles sont munies de l'alésage 192 ou 194 qui est situé dans l'axe de symétrie du coin extérieur arrondi 196. Ces alésages 192 et 194 reçoivent les moyens de fixation de l'articulation de la pale correspondante, c'est-à-dire de la butée sphérique lamifiée correspondante, les alésages 192 étant disposés dans les pièces plates 195 constituant l'ossature de l'anneau externe 187 et les alésages 194 étant disposés dans les pièces plates 195 constituant l'ossature de l'anneau interne 188. Ces pièces plates 195 forment ainsi l'ossature de base de chacun des anneaux externe 187 et interne 188, sur laquelle est disposée une coque qui est constituée par les ceintures de renfort desdits anneaux 187 et 188, ainsi que par la paroi mince 189 de liaison des deux anneaux 187 et 188, dans laquelle sont découpées les ouvertures 190 pour le passage des articulations et des organes de liaison de chaque pale.

Les pièces plates 195 de l'ossature de chacun des anneaux 187 et 188 sont réalisées en résine chargée du type qualifié par le terme anglais de compound, et plus précisément ces pièces sont en compound moulé de résine avec des fibres coupées de carbone. Dans cette variante de réalisation de l'invention, les pièces plates 195 peuvent être réalisées par un empilage de tissus de carbone qui sont pré-imprégnés de résine synthétique, moulés et polymérisés à chaud sous pression. La ceinture de renfort 197 de l'anneau externe 187, la ceinture de renfort 198 de l'anneau interne 188 et la paroi mince 189 constituent la coque qui est en matériau composite. Ce matériau composite est constitué par des fibres unidirectionnelles à haute résistance mécanique qui sont imprégnées de résine synthétique polymérisable à chaud. Ces fibres peuvent être des fibres minérales ou synthétiques. Selon un mode de réalisation de l'invention, la coque de fibres à haute résistance est constituée de stratifils bobinés. Selon un autre mode de réalisation de l'invention, la coque de fibres à haute résistance est constituée par des rubans bobinés. Selon une autre variante de réalisation de l'invention, la coque de fibres à haute résistance est constituée de tissus drapés. Dans ces trois modes de réalisation, les fibres des stratifils, les fibres des rubans bobinés et les fibres des tissus drapés sont, soit des fibres en carbone, soit des fibres du type aramide.

L'embase 184 tronconique de liaison de l'anneau interne 188 avec l'extrémité 203 du mât 3 est réalisée par un empilage de tissus de fibres à haute résistance par exemple en carbone, pré-imprégnés de résine synthétique du type époxy, moulés et polymérisés à chaud.

La tête de rotor équipée du corps de moyeu 181 selon l'invention permet d'obtenir une structure qui a l'avantage de libérer la partie centrale du rotor. De ce fait, les contrefiches de rappel élastique d'amortissement de la pale en traînée peuvent s'y intégrer facilement et l'ensemble du dispositif avec les liaisons de pied de pale peut être amené plus près de l'axe du rotor. Par ailleurs, cette variante est plus légère que celle dans laquelle le corps de moyeu est métallique, en raison du faible poids spécifique des matériaux composites stratifiés qui constituent sa structure résistante.

## Revendications

1. Corps de moyeu de rotor de giravion, du type dans lequel chaque pale (2) est reliée audit corps (1) par des articulations (5) et des organes de liaison (6), comportant deux éléments résistants (7, 8) dont les plans sont sensiblement parallèles l'un par rapport à l'autre et perpendiculaires à l'axe du mât (3) de rotor, les deux éléments résistants (7, 8) etant séparés l'un de l'autre par un espace suffisant pour permettre de loger lesdites articulations, et dans lequel, pour chaque pale (2), chaque élément résistant (7, 8) comporte au moins un alésage (12, 14) suivant un axe sensiblement parallèle à l'axe du mât (3) de rotor, chaque alésage (12) de l'un des éléments résistants (7) faisant face à un alésage (14) correspondant de l'autre élément résistant (8), de manière à recevoir les moyens de fixation (21) de l'articulation (5) de la pale correspondante, caractérisé :
- en ce que les deux éléments résistants sont des anneaux, un anneau externe (7), le plus éloigné du mât (3) de rotor, et un anneau interne (8), le plus proche du mât (3) de rotor, formant chacun une jante rigide et qui sont reliés par une paroi mince (9) de forme sensiblement cylindrique, comportant au moins autant d'ouvertures (10) qu'il y a de pales (2), chaque ouverture (10) ayant des dimensions suffisantes pour au moins le passage des articulations (5) de la pale (2) correspondante avec leurs débattements angulaires ;
- en ce que chaque anneau (7, 8) comporte au moins un alésage (12, 14) suivant un axe sensiblement parallèle à l'axe du mât (3) du rotor, alésage situé dans chacune des zones des ouvertures (10) aménagées dans la paroi mince (9), chaque alésage (12) de l'anneau externe (7) faisant face à un alésage (14) correspondant à l'anneau interne (8) de manière à recevoir les moyens de fixation (21) de l'articulation (5) de la pale correspondante ;
- et enfin en ce que la liaison entre le corps de moyeu (1) et le mât (3) de rotor est réalisée par une embase mince (4) de forme tronconique dont la grande base externe est solidarisée avec l'anneau interne (8) et la petite base interne est solidarisée avec l'extrémité du mât (3) de rotor.

2. Corps de moyeu de rotor de giravion, du type dans lequel chaque pale (2) est reliée audit corps (1) par des articulations (5) et, à chacune des pales voisines par des organes de liaison (6), comportant deux éléments résistants (7, 8) dont les plans sont sensiblement parallèles l'un par rapport à l'autre et perpendiculaires à l'axe du mât (3) de rotor, les deux éléments résistants (7, 8) étant séparés l'un de l'autre par un espace suffisant pour permettre de loger lesdites articulations, et dans lequel, pour chaque pale (2), chaque élément résistant (7, 8) comporte au moins un alésage (12, 14) suivant un axe sensiblement parallèle à l'axe du mât (3) de rotor, chaque alésage (12) de l'un des éléments résistants (7) faisant face à un alésage (14) correspondant de l'autre élément résistant (8), de manière à recevoir les moyens de fixation (21) de l'articulation (5) de la pale correspondante, caractérisé :
- en ce que les deux éléments résistants sont des anneaux, un anneau externe (7), le plus éloigné du mât (3) de rotor, et un anneau interne (8), le plus proche du mât (3) de rotor, formant chacun une jante rigide et qui sont reliés par une paroi mince (9) de forme sensiblement cylindrique, comportant au moins autant d'ouvertures (10) qu'il y a de pales (2), chaque ouverture (10) ayant des dimensions suffisantes pour au moins le passage des articulations (5) de la pale (2) correspondante avec leurs débattements angulaires ;
- en ce que chaque anneau (7, 8) comporte au moins un alésage (12, 14) suivant un axe sensiblement parallèle à l'axe du mât (3) du rotor, alésage situé dans chacune des zones des ouvertures (10) aménagées dans la paroi mince (9), chaque alésage (12) de l'anneau externe (7) faisant face à un alésage (14) correspondant à l'anneau interne (8) de manière à recevoir les moyens de fixation (21) de l'articulation (5) de la pale correspondante ;
- et enfin en ce que la liaison entre le corps de moyeu (1) et le mât (3) de rotor est réalisée par une embase mince (4) de forme tronconique dont la grande base externe est solidarisée avec l'anneau interne (8) et la petite base interne est solidarisée avec l'extrémité du mât (3) de rotor.

3. Corps de moyeu selon la revendication 1, caractérisé en ce que la paroi mince (89), qui relie les deux anneaux interne (88) et externe (87) et qui comporte au moins autant d'ouvertures (90) qu'il y a de pales (2), a chacune de ses ouvertures (90) avec des dimensions suffisantes pour le passage des organes (106) de liaison élastique et d'amortissement en traînée de la pale (2) correspondante avec leurs débattements angulaires en plus du passage pour les articulations (5) de ladite pale.

4. Corps de moyeu selon la revendication 1, caractérisé en ce que la paroi mince, qui relie les deux anneaux interne et externe, porte une chape pour la fixation des moyens de liaison élastique et d'amortissement de chacune des pales en traînée.

5. Corps de moyeu selon l'une des revendications 1 à 4, caractérisé en ce que ledit corps (1) est métallique et forme de plus une pièce monobloc avec l'embase (4) et le mât (3).

6. Corps de moyeu selon l'une des revendications 1 à 4, caractérisé en ce que ledit corps (131) est métallique et forme de plus une pièce monobloc avec l'embase (134).

7. Corps de moyeu selon l'une des revendications 1 à 4, caractérisé en ce que ledit corps (111) est métallique et est relié avec l'embase (114) et le mât (3) par des moyens de fixation démontables.

8. Corps de moyeu selon la revendication 7, caractérisé en ce que les moyens de fixation du corps de moyeu (111) sur l'embase (114) sont les moyens de fixation de l'articulation (5) de la pale (2) sur l'anneau interne (118) du corps de moyeu (111).

9. Corps de moyeu selon l'une des revendications 1 à 8, caractérisé en ce que les anneaux ont une forme cylindrique circulaire.

10. Corps de moyeu selon l'une des revendications 1 à 8, caractérisé en ce que les anneaux (7) et (8) ont une forme polygonale à sommets arrondis (11) et (13), dont chaque sommet correspond à l'axe d'une pale (2).

11. Corps de moyeu selon l'une des revendications 1 à 10, caractérisé en ce qu'au moins un anneau (47, 48) est entouré d'une sangle (55, 56) formant ceinture de renfort et de sécurité.

12. Corps de moyeu selon la revendication 11, caractérisé en ce que la sangle (55, 56) formant ceinture de renfort et de sécurité est réalisée en stratifils de fibres à haute résistance mécanique agglomérées par de la résine synthétique polymérisable.

13. Corps de moyeu selon la revendication 11, caractérisé en ce que la sangle (55, 56) formant ceinture de renfort et de sécurité est réalisée en rubans de fibres à haute résistance mécanique agglomérées par de la résine synthétique polymérisable.

14. Corps de moyeu selon les revendications 11 à 13, caractérisé en ce que l'anneau (47, 48) qui comporte une sangle (55, 56) formant ceinture de renfort et de sécurité, est muni d'un logement (57, 58) qui suit le contour dudit anneau (47, 48), dont la section polygonale est débouchante radialement vers l'extérieur du logement (57, 58) qui reçoit ladite sangle (55, 56) formant ceinture de renfort et de sécurité.

15. Corps de moyeu selon la revendication 14, caractérisé en ce que le logement (57, 58) est de section carrée.

16. Corps de moyeu selon la revendication 14, caractérisé en ce que le logement (57, 58) est de section rectangulaire.

17. Corps de moyeu selon l'une des revendications 11 à 16, caractérisé en ce que la sangle (55, 56), formant ceinture de renfort et de sécurité en fibres unidirectionnelles à haute résistance mécanique pré-imprégnées de résine synthétique polymérisable, est réalisée par des stratifils ou des rubans constitués de telles fibres qui sont mis en place sur chaque anneau par bobinage, la résine étant ensuite polymérisée à chaud.

18. Corps de moyeu selon l'une des revendications 11 à 17, caractérisé en ce que les fibres à haute résistance mécanique constituant la sangle (55, 56) formant ceinture de renfort et de sécurité sont des fibres aramides, et que la résine d'imprégnation est du type époxy.

19. Corps de moyeu selon l'une des revendications 11, 14, 15 et 16, caractérisé en ce que la sangle (55, 56) formant ceinture de sécurité et de renfort est réalisée en fils métalliques noyés dans un élastomère.

20. Corps de moyeu selon l'une des revendications 1 et 2, caractérisé en ce que ledit corps de moyeu (181) est en matériau composite.

21. Corps de moyeu selon la revendication 20, caractérisé en ce que chaque anneau (187, 188) est constitué par autant de pièces plates (195) identiques qu'il y a de pales (2), ces pièces plates (195) étant juxtaposées, de manière à former en un ensemble continu une ossature, lesdites pièces plates (195) ayant un coin extérieur arrondi (196), et munies dans l'axe de symétrie du coin (196) de l'alésage (192, 194) recevant le moyen de fixation de l'articulation (5) de pale (2), et en ce que sur cette ossature est disposée une coque constituée par des fibres à haute résistance imprégnées de résine synthétique polymérisable à chaud pour constituer les ceintures de renfort (197, 198) des anneaux (187, 188), ainsi que la paroi mince (189) de liaison des deux anneaux (187, 188), dans laquelle sont découpées les ouvertures (190) pour le passage des articulations et des organes de liaison de chaque pale.

22. Corps de moyeu selon la revendication 21, caractérisé en ce que les pièces plates (195) constituant l'ossature des anneaux (187, 188) sont réalisées en compound moulé de résine avec des fibres coupées de carbone.

23. Corps de moyeu selon la revendication 21, caractérisé en ce que les pièces plates (195) constituant l'ossature des anneaux (187, 188) sont réalisées par un empilage de tissus de carbone pré-imprégnés de résine synthétique, polymérisé à chaud et sous pression.

24. Corps de moyeu selon l'une des revendications 21 à 23, caractérisé en ce que la coque de fibres à haute résistance disposée autour de l'ossature des anneaux (187, 188) pour constituer les ceintures de renfort (197, 198) des anneaux (187, 188) et la paroi mince (189) de liaison des deux anneaux (187, 188) est constituée de stratifils bobinés.

25. Corps de moyeu selon les revendications 21 à 23, caractérisé en ce que la coque de fibres à haute résistance, disposée autour de l'ossature des anneaux (187, 188) pour constituer les ceintures de renfort (197, 198) des anneaux (187, 188) et la paroi mince (189) de liaison des deux anneaux (187, 188), est constituée de rubans bobinés.

26. Corps de moyeu selon les revendications 21 à 23, caractérisé en ce que la coque de fibres à haute résistance, disposée autour de l'ossature des anneaux (187, 188) pour constituer les ceintures de renfort (197, 198) des anneaux (187, 188) et la paroi mince (189) de liaison des deux anneaux (187, 188), est constituée de tissus drapés.

27. Corps de moyeu selon l'une des revendications 24 à 26, caractérisé en ce que les fibres des stratifils, les fibres des rubans bobinés et les fibres des tissus drapés sont en carbone.

28. Corps de moyeu selon les revendications 24 à 26, caractérisé en ce que les fibres des stratifils, les fibres des rubans bobinés et les fibres des tissus drapés sont du type aramide.

29. Corps de moyeu selon la revendication 20, caractérisé en ce que l'embase tronconique (184) de liaison de l'anneau interne (188) avec le sommet du mât (3) est réalisée par un empilage de tissus pré-imprégnés de résine synthétique, moulés et polymérisés à chaud.

30. Corps de moyeu selon la revendication 29, caractérisé en ce que les tissus constituant l'embase (184) de liaison de l'anneau interne (188) au mât (3) sont des tissus de carbone pré-imprégnés de résine époxy.

31. Tête de rotor de giravion, caractérisée en ce qu'elle comporte un corps de moyeu selon l'une des revendications précédentes.

32. Tête de rotor selon la revendication 31, caractérisée en ce que l'organe de retenue et d'articulation de chaque pale (2) sur le corps de moyeu (1) est une butée sphérique lamifiée (5), dont l'armature interne (16) est encastrée à l'intérieur d'une boucle rigide constituant l'attache de la pale (2) et qui contourne, de façon continue, la butée sphérique lamifiée (5), et dont l'armature externe (17) est solidarisée avec les deux anneaux interne (8) et externe (7) du corps de moyeu (1) par au moins une broche de liaison boulonnée (21) traversant ladite armature externe (17) et chacun des alésages (12, 14) correspondants ménagés dans les anneaux (7, 8).

33. Tête de rotor selon la revendication 32, caractérisée en ce que l'armature externe (17) de la butée sphérique lamifiée est immobilisée en traînée par deux vis de fixation (71) traversant l'un des anneaux (47, 48) du corps de moyeu (41) et disposées de part et d'autre de la broche de liaison boulonnée (21) solidarisant ladite armature externe (17) aux deux anneaux (47, 48) du corps de moyeu (41).

34. Tête de rotor selon la revendication 32, caractérisée en ce que la broche de liaison boulonnée (21), traversant l'armature externe (17) de la butée sphérique lamifiée (5) et les alésages correspondants ménagés dans les anneaux (7, 8) du corps de moyeu (1), est un axe cylindrique creux (22) comportant à l'une de ses extrémités une collerette (23) qui vient s'appliquer sur la face externe (24) de l'anneau (7) correspondant, ledit axe creux (22) ayant une longueur légèrement inférieure à la distance des deux faces externes (24, 25) des anneaux (7, 8) et dans lequel passe un boulon (28), dont la tête (29) s'appuie sur ladite collerette (23) de l'axe creux (22) et dont l'autre extrémité filetée (30) reçoit un écrou freiné (32) et une rondelle (31) qui s'appuie sur la bordure de l'alésage (14) ménagé dans l'anneau (8) correspondant.

35. Tête de rotor selon l'une des revendications 32 à 34, caractérisée en ce que chaque alésage (12, 14), ménagé dans les anneaux (7, 8) du corps de moyeu (1), porte une douille (33) munie d'un épaulement (34) monté du côté interne (26, 27), de façon à venir s'appliquer sur l'armature (17) de butée lamifiée (5) formant entretoise entre les deux anneaux (7, 8).

36. Tête de rotor selon la revendication 32, caractérisée en ce que l'attache de pale (2) en forme de boucle rigide qui contourne de façon continue la butée sphérique lamifiée en s'encastrant sur ladite butée (5), est constituée par des stratifils qui forment le longeron résistant de la pale (2) et qui, dans la zone d'emplanture de la pale (2), sont aménagés en une boucle (18) de section rectangulaire.

37. Tête de rotor selon la revendication 32, caractérisée en ce que l'attache de pale (2) en forme de boucle rigide, qui contourne de façon continue la butée sphérique lamifiée en s'encastrant sur ladite butée (5), est un manchon intermédiaire 99 monobloc conformé du côté de l'axe rotor en étrier (100) de section rectangulaire pour former la boucle d'attache de pale et conformé du côté opposé en chape double (101) pour coopérer avec des moyens de solidarisation avec le pied de ladite pale (2), lequel manchon (99) comporte également latéralement une corne (102) munie à son extrémité d'une chape (103) reliée aux commandes du rotor, ainsi qu'une attache à rotule (104) pour l'extrémité d'une contrefiche (106) de rappel élastique avec amortissement incorporé de la pale en traînée.

38. Tête de rotor selon l'une des revendications 36 et 37, caractérisée en ce que l'attache de pale (2) en forme de boucle rigide, qui contourne de façon continue la butée sphérique lamifiée en s'encastrant sur ladite butée (5), est maintenue plaquée dans un logement (37) correspondant ménagé dans l'armature interne (16) de la butée (5) par une plaque (19) fixée sur l'armature (16) par des vis (20).

39. Tête de rotor selon l'une des revendications 31 à 38, caractérisée en ce qu'elle comporte des butées de battement.

40. Tête de rotor selon la revendication 39, caractérisée en ce que chaque attache de pale comporte une butée haute et/ou une butée basse de battement, le patin (63) de la butée haute venant en appui direct pour un angle de battement positif donné sur le pourtour de l'anneau externe (47) et le patin (64) de la butée basse venant en appui pour un angle de battement négatif donné sur un renfort métallique (72) fixé sur le pourtour de l'anneau interne (48).

41. Tête de rotor selon l'une des revendications 31 à 40, caractérisée en ce que chaque attache de pale comporte des butées de traînée (66, 69) disposées sur des cornes latérales situées de part et d'autre de l'axe de la pale (2) et qui viennent pour un angle de traînée donné s'appuyer directement contre le pourtour d'au moins un des anneaux (47, 48).

42. Tête de rotor selon la revendication 39, caractérisée en ce que chaque attache de pale comporte une butée haute et/ou une butée basse de battement, le patin (153) de la butée haute venant en appui direct pour un angle de battement positif donné sur le pourtour de l'anneau externe (137) et le patin (154) de la butée basse venant en appui pour un angle de battement négatif donné sur la périphérie d'un anneau réciproque (155) rigide maintenu en place sous l'anneau interne (138) du corps de moyeu (131) et, parallèlement à ce dernier, au moyen d'étriers (156) fixés au corps de moyeu (131) par le ou les boulons (159) de fixation de l'armature (17) de la butée lamifiée (5) sur les anneaux (137, 138) du corps de moyeu (131), ces étriers (156) étant disposés de manière à laisser à l'anneau réciproque (155) une possibilité de débattement limité dans son propre plan.

## Claims

1. Gyrocraft rotor hub body, of the type in which each blade (2) is linked to the said body (1) by articulations (5) and linking members (6), comprising two strong elements (7, 8) whose planes are substantially parallel to each other and perpendicular to the axis of the rotor mast (3), the two strong elements (7, 8) being separated from each other by a space sufficient to permit the housing of the said articulations and in which, for each blade (2), each strong element (7, 8) comprises at least one bore (12, 14) the axis whereof is oriented essentially parallel to the axis of the mast (3) of the rotor, each bore (12) of one of the strong elements (7) facing a corresponding bore (14) of the other strong element (8) in such a manner as to receive the means of fixing (21) of the articulation (5) of the corresponding blade, characterised:
- in that the two strong elements are rings, an external ring (7) distal to the mast (3) and an internal ring (8) proximal to the mast (3), each forming a rigid rim and which are linked by a thin wall (9) of substantially cylindrical form, comprising at least as many openings (10) as there are blades (2), each opening (10) having dimensions sufficient for at least the passage of the articulations (5) of the corresponding blade (2) with their angular flappings;
- in that each ring (7, 8) comprises at least one bore along an axis substantially parallel to the axis of the hub body, such a bore being situated in each of the areas of openings (10) made in the thin wall (9), each bore (12) of the external ring (7) facing a corresponding bore (14) in the internal ring (8) in such a manner as to receive the means of fixing (21) of the articulation (5) of the corresponding blade;
- and finally in that the linking between the hub body (1) and the rotor mast (3) is made by a thin base plate (4) of truncated conical form whose large external base is integral with the internal ring (8) and the small internal base is integral with the extremity of the rotor mast (3).

2. Gyrocraft rotor hub body, of the type in which each blade (2) is linked to the said body (1) by articulations (5) and to each one of the neighboring blades by linking members (6), comprising two strong elements (7, 8) whose planes are substantially parallel to each other and perpendicular to the axis of the rotor mast (3), the two strong elements (7, 8) being separated from each other by a space sufficient to permit the housing of the said articulations and in which, for each blade (2), each strong element (7, 8) comprises at least one bore (12, 14) the axis whereof is oriented essentially parallel to the axis of the mast (3) of the rotor, each bore (12) of one of the strong elements (7) facing a corresponding bore (14) of the other strong element (8) in such a manner as to receive the means of fixing (21) of the articulation (5) of the corresponding blade, characterised:
- in that the two strong elements are rings, an external ring (7) distal to the mast (3) and an internal ring (8) proximal to the mast (3), each forming a rigid rim and which are linked by a thin wall (9) of substantially cylindrical form, comprising at least as many openings (10) as there are blades (2), each opening (10) having dimensions sufficient for at least the passage of the articulations (5) of the corresponding blade (2) with their angular flappings;
- in that each ring (7, 8) comprises at least one bore along an axis substantially parallel to the axis of the hub body, such a bore being situated in each of the areas of openings (10) made in the thin wall (9), each bore (12) of the external ring (7) facing a corresponding bore (14) in the internal ring (8) in such a manner as to receive the means of fixing (21) of the articulation (5) of the corresponding blade;
- and finally in that the linking between the hub body (1) and the rotor mast (3) is made by a thin base plate (4) of truncated conical form whose large external base is integral with the internal ring (8) and the small internal base is integral with the extremity of the rotor mast (3).

3. Hub body according to Claim 1, characterised in that the thin wall (89), which links the two internal (88) and external (87) rings and which comprises at least as many openings (90) as there are blades (2), has each of its openings (90) with dimensions sufficient for the passage of the members (106) for elastic linking and drag damping of the corresponding blade (2) with their angular flappings as well as the passage for the articulations (5) of the said blade.

4. Hub body according to Claim 1, characterised in that the thin wall which links the two internal and external rings carries a clevis for the fixing of the means of elastic linking and drag damping of each of the blades.

5. Hub body according to one of Claims 1 to 4, characterised in that the said body (1) is metallic and forms moreover a single piece with the base plate (4) and the mast (3).

6. Hub body according to one of Claims 1 to 4, characterised in that the said body (131) is metallic and forms moreover a single piece with the base plate (134).

7. Hub body according to one of Claims 1 to 4, characterised in that the said body (111) is metallic and is linked with the base plate (114) and the mast (3) by means of fixing capable of being dismantled.

8. Hub body according to Claim 7, characterised in that the means of fixing of the hub body (111) onto the base plate (114) are the means of fixing the articulation (5) of the blade (2) on the internal ring (118) of the hub body (111).

9. Hub body according to one of Claims 1 to 8, characterised in that the rings have a circular cylindrical form.

10. Hub body according to one of Claims 1 to 8, characterised in that the rings (7) and (8) have a polygonal form with rounded vertices (11) and (13), of which each vertex corresponds to the axis of a blade (2).

11. Hub body according to one of Claims 1 to 10, characterised in that at least one ring (47, 48) is surrounded by a belt (55, 56) forming safety and reinforcing banding.

12. Hub body according to Claim 11, characterised in that the belt (55, 56) forming safety and reinforcing banding is made in rovings of fibres with high mechanical strength agglomerated by polymerizable synthetic resin.

13. Hub body according to Claim 11, characterised in that the belt (55, 56) forming safety and reinforcing banding is made in ribbons of fibres of high mechanical strength agglomerated by polymerizable synthetic resin.

14. Hub body according to Claims 11 to 13, characterised in that the ring (47, 48) which comprises a belt (55, 56) forming safety and reinforcing banding is fitted with a housing (57, 58), which follows the contour of the said ring (47, 48), of which the polygonal cross-section opens out radially towards the exterior of the housing (57, 58) which receives the said belt (55, 56) forming safety and reinforcing banding.

15. Hub body according to Claim 14, characterised in that the housing (57, 58) is of square cross-section.

16. Hub body according to Claim 14, characterised in that the housing (57, 58) is of rectangular cross-section.

17. Hub body according to one of Claims 11 to 16, characterised in that the belt (55, 56) forming safety and reinforcing banding in unidirectional fibres with high mechanical strength preimpregnated with polymerizable synthetic resin is made by rovings or ribbons comprising such fibres which are put in place on each ring by winding, the resin being subsequently hot-polymerized.

18. Hub body according to one of Claims 11 to 17, characterised in that the fibres with high mechanical strength constituting the belt (55, 56) forming safety and reinforcing banding are aramid fibres and in that the impregnation resin is of the epoxy type.

19. Hub body according to one of Claims 11, 14, 15 and 16, characterised in that the belt (55, 56) forming safety and reinforcing banding is made from metallic wires immersed in an elastomer.

20. Hub body according to Claim 1 or 2, characterised in that the said hub body (181) is in composite material.

21. Hub body according to Claim 20, characterised in that each ring (187, 188) is composed of as many identical flat pieces (195) as there are blades (2), these flat pieces (195) being juxtaposed in such a manner as to form, in one continuous assembly, a framework, the said flat pieces (195) having a rounded external corner (196), and being fitted in the axis of symmetry of the corner (196) with the bore (192, 194) receiving the means of fixing of the articulation (5) of the blade (2), and in that on this framework is arranged a shell composed of fibres of high strength impregnated with hot-polymerizable synthetic resin in order to constitute the reinforcing bandings (197, 198) of the rings (187, 188) as well as the thin linking wall (189) of the two rings (187, 188) in which are cut out the openings (190) for the passage of the articulations and the linking members of each blade.

22. Hub body according to Claim 21, characterised in that the flat pieces (195) constituting the framework of the rings (187, 188) are made in moulded resin compound with cut carbon fibres.

23. Hub body according to Claim 21, characterised in that the flat pieces (195) constituting the framework of the rings (187, 188) are made by a stacking of carbon fabrics preimpregnated with synthetic resin, hot-polymerized under pressure.

24. Hub body according to one of Claims 21 to 23, characterised in that the shell of fibres with high strength arranged around the framework of the rings (187, 188) in order to constitute the reinforcing bandings (197, 198) of the rings (187, 188) and the thin wall (189) for linking the two rings (187, 188) is composed of wound ribbons.

25. Hub body according to Claims 21 to 23, characterised in that the shell of fibres of high strength arranged around the framework of the rings (187, 188) constitute the reinforcing bandings (197, 198) of the rings (187, 188) and in that the thin wall (189) for linking the two rings (187, 188) is composed of wound ribbons.

26. Hub body according to Claims 21 to 23, characterised in that the shell of fibres of high strength arranged around the framework of the rings (187, 188) in order to constitute the reinforcing bandings (197, 198) of the rings (187, 188) and the thin wall (189) for linking the two rings (187, 188) is composed of drape-formed fabrics.

27. Hub body according to one of Claims 24 to 26, characterised in that the fibres of the rovings, the fibres of the wound ribbons and the fibres of the drape-formed fabrics are in carbon.

28. Hub body according to Claims 24 to 26, characterised in that the fibres of the rovings, the fibres of the wound ribbons and the fibres of the drape-formed fabrics are of the aramid type.

29. Hub body according to Claim 20, characterised in that the truncated conical base plate (184) for linking the internal ring (188) with the peak of the mast (3) is made by a stacking of fabrics preimpregnated with synthetic resin, moulded and hot-polymerized.

30. Hub body according to Claim 29, characterised in that the fabrics constituting the base plate (184) for linking the internal ring (188) to the mast (3) are carbon fabrics preimpregnated with epoxy resin.

31. Gyrocraft rotor head which comprises a hub body according to one of the preceding claims.

32. Rotor head according to Claim 31, characterised in that the articulation and retention member for each blade (2) on the hub body (1) is a laminated spherical stop (5) whose internal armature (16) is embedded in the interior of a rigid shackle constituting the attachment of the blade (2) and which surrounds the laminated spherical stop (5) in a continuous fashion and whose external armature (17) is integrated with the two internal (8) and external (7) rings of the hub body (1) by at least one bolted linking spindle (21) through the said external armature (17) and each of the corresponding bores (12, 14) made in the rings (7, 8).

33. Rotor head according to Claim 32, characterised in that the external armature (17) of the laminated spherical stop is immobilized in drag by two fixing screws (71) going through one of the rings (47, 48) of the hub body (41) and arranged on either side of the bolted linking spindle (21) securing the said external armature (17) to the two rings (47, 48) of the hub body (41).

34. Rotor head according to Claim 32, characterised in that the bolted linking pin (21) going through the external armature (17) of the laminated spherical stop (5) and the corresponding bores made in the rings (7, 8) of the hub body (1) is a hollow cylindrical shaft (22) comprising at one of its extremities an annular flange (23) which comes to sit on the external face (24) of the corresponding ring (7), the said hollow shaft (22) having a length slightly less than the distance between the two external faces (24, 25) of the rings (7, 8) and in which passes a bolt (28) whose head (29) bears on the said annular flange (23) of the hollow shaft (22) and whose other threaded extremity (30) receives a stiff nut (32) and a washer (31) which bear on the border of the bore (14) made in the corresponding ring (8).

35. Rotor head according to one of Claims 32 to 34, characterised in that each bore (12, 14) made in the rings (7, 8) of the hub body (1) carries a bush (33) fitted with a shoulder (34) mounted on the internal side (26, 27) in such a way as to come to sit on the armature (17) of the laminate stop (5) forming a bracing between the two rings (7, 8).

36. Rotor head according to Claim 32, characterised in that the attachment of the blade (2) in the form of a rigid shackle, which surrounds the laminated spherical stop, in a continuous fashion embedding itself on the said stop (5), is composed on rovings which form the strong spar of the blade (2) and which, in the root area of the blade (2), are fitted out as a shackle (18) of rectangular cross-section.

37. Rotor head according to Claim 32, characterised in that the blade (2) attachment in the form of a rigid shackle, which surrounds the laminated spherical stop in a continuous fashion, embedding itself on the said stop (5), is an intermediate single-piece sleeve (99) shaped on the side of the rotor axis as a stirrup (100) of rectangular cross-section in order to form the blade-attachment shackle and shaped on the opposite side as a double clevis (101) in order to act with the means of integrating with the foot of the said blade (2), which sleeve (99) also comprises laterally a protrusion (102) fitted at its extremity with a clevis (103) linked to the rotor controls as well as to a ball-and-socket attachment (104) for the extremity of a blade elastic drag return and damping strut (106).

38. Rotor head according to one of Claims 36 and 37, characterised in that the blade attachment (2) in the form of a rigid shackle which surrounds the laminated spherical stop in a continuous fashion embedding in the said stop (5), is held confined in a corresponding housing (37) made in the internal armature (16) of the stop (5) by a plate (19) fixed on the armature (16) by screws (20).

39. Rotor head according to one of Claims 31 to 38, characterised in that it comprises flapping stops.

40. Rotor head according to Claim 39, characterised in that each blade attachment comprises a top flapping stop and/or a bottom flapping stop, the block (63) of the top stop coming to press directly, for a given positive angle of flapping, on the circumference of the external ring (47) and the block (64) of the bottom stop coming to press, for a given negative angle of flapping, on a metallic reinforcement (72) fixed on the circumference of the internal ring (48).

41. Rotor head according to one of Claims 31 to 40, characterised in that each blade attachment comprises drag stops (66, 69) arranged on lateral protrusions situated on either side of the axis of the blade (2) and which come, for a given drag angle, to press directly against the circumference of at least one of the rings (47, 48).

42. Rotor head according to Claim 39, characterised in that each blade attachment comprises a top flapping stop and/or a bottom flapping stop, the block (153) of the top stop coming to press directly, for a given positive angle of flapping, on the circumference of the external ring (137) and the block (154) of the bottom stop coming to press directly, for a given negative flapping angle, on the periphery of a rigid reciprocal ring (155) maintained in place under the internal ring (138) of the hub body (131), and parallel to the latter, by means of stirrups (156) fixed to the hub body (131) by the bolt or bolts (159) for fixing the armature (17) of the laminated stop (5) onto the rings (137, 138) of the hub body (131), these stirrups (156) being arranged in such a manner as to leave the reciprocal ring (155) a limited flapping ability in its own plane.

## Patentansprüche

1. Rotornabe eines Drehflügelflugzeuges der Bauart, bei welcher jedes Blatt (2) über Gelenke (5) und Verbindungsorgane (6), welche zwei feste Elemente (7,8), deren Ebenen im wesentlichen parallel zueinander und rechtwinklig zu der Achse des Rotormasts (3) orientiert sind, umfassen, mit der Nabe verbunden ist, wobei die festen Elemente (7,8) voneinander durch einen genügenden Zwischenraum getrennt sind, der es erlaubt, die Gelenke unterzubringen, und in welchem jedes feste Element (7,8) für jedes Blatt (2) wenigstens eine Bohrung (12,14) umfaßt, die einer Achse im wesentlichen parallel zu der Achse des Rotormasts (3) folgt, wobei jede Bohrung (12) eines der festen Elemente (7) einer entsprechenden Bohrung (14) des anderen festen Elements (8) dergestalt gegenüberliegt, daß Befestigungsmittel (21) des Gelenks (5) des entsprechenden Blatts aufgenommen werden,
**dadurch gekennzeichnet,**
- daß die beiden festen Elemente Ringe sind, wobei ein Außenring (7), der von dem Rotormast (3) entfernter ist, und ein Innenring (8), der dem Rotormast näher ist, je einen festen Kranz bilden und über eine dünne, im wesentlichen zylindrisch geformte Wand (9) miteinander verbunden sind, die wenigstens so viele Öffnungen aufweist, wie es Blätter (2) gibt, wobei jede Öffnung hinreichend grosse Abmessungen wenigstens für den Durchgang der Gelenke (5) des entsprechenden Blattes (2) mit dessen Schlagwinkeln aufweist;
- daß jeder Ring (7,8) wenigstens eine Bohrung (12,14) aufweist, welche einer Achse im wesentlichen parallel zu der Achse des Rotormasts (3) folgt, wobei die Bohrung in jedem der Bereiche der Öffnungen (10) angeordnet ist, welche in der dünnen Wand (9) ausgebildet sind, wobei jede Bohrung (12) des Außenrings (7) einer entsprechenden Bohrung (14) des Innenrings (8) dergestalt gegenüberliegt, daß die Befestigungsmittel (21) des Gelenks (5) des entsprechenden Blatts aufgenommen werden;
- und daß schließlich die Verbindung zwischen der Nabe (1) und dem Rotormast (3) durch einen dünnen Sockel kegelstumpfförmiger Form hergestellt ist, deren große Grundseite mit dem Innenring (8) in Verbindung steht und deren kleine Grundseite mit dem Ende des Rotormasts (3) verbunden ist.

2. Rotornabe eines Drehflügelflugzeugs der Bauart, bei der jedes Rotorblatt (2) mit der Nabe (1) über Gelenke (5) und mit jedem der benachbarten Rotorblätter über Verbindungsorgane (6) verbunden ist, welche zwei feste Elemente (7,8) umfassen, deren Ebenen im wesentlichen parallel zueinander und rechtwinklig zu der Achse des Rotormasts (3) orientiert sind, wobei die festen Elemente (7,8) voneinander durch einen genügenden Zwischenraum getrennt sind, der es erlaubt, die Gelenke unterzubringen, und in welchem jedes feste Element (7,8) für jedes Rotorblatt (2) wenigstens eine Bohrung (12,14) aufweist, die einer Achse folgt, welche im wesentlichen parallel zu der Achse des Rotormasts (3) liegt, wobei jede Bohrung (12) eines der festen Elemente (7) einer entsprechenden Bohrung (14) des anderen festen Elements (8) dergestalt gegenüberliegt, daß Befestigungsmittel (21) des Gelenks (5) des entsprechenden Blatts aufgenommen werden,
**dadurch gekennzeichnet,**
- daß die beiden festen Elemente Ringe sind, wobei ein Außenring (7), der von dem Rotormast (3) entfernter ist, und ein Innenring (8), der dem Rotormast näher ist, je einen festen Kranz bilden und über eine dünne, im wesentlichen zylindrisch geformte Wand (9) miteinander verbunden sind, die wenigstens so viele Öffnungen (10) aufweist, wie es Blätter (2) gibt, wobei jede Öffnung hinreichend grosse Abmessungen wenigstens für den Durchgang der Gelenke (5) des entsprechenden Blattes (2) mit dessen Schlagwinkeln aufweist;
- daß jeder Ring (7,8) wenigstens eine Bohrung (12,14) aufweist, welche einer Achse im wesentlichen parallel zu der Achse des Rotormastes (3) folgt, wobei die Bohrung in jedem der Bereiche der Öffnungen (10) angeordnet ist, welche in der dünnen Wand (9) ausgebildet sind, wobei jede Bohrung (12) des Außenrings (7) einer entsprechenden Bohrung des Innenrings (8) dergestalt gegenüberliegt, daß die Befestigungsmittel (21) des Gelenks (5) des entsprechenden Blattes aufgenommen werden;
- und daß schließlich die Verbindung zwischen der Nabe (1) und dem Rotormast (3) durch einen dünnen Sockel (4) kegelstumpfförmiger Form hergestellt ist, deren große äußere Grundseite mit dem Innenring (8) in Verbindung steht und deren kleine innere Grundseite mit dem Ende des Rotormasts (3) verbunden ist.

3. Nabe nach Anspruch 1,
**dadurch gekennzeichnet,**
daß die dünne Wand (89), welche den Innenring (88) und den Außenring (87) miteinander verbindet und die wenigstens so viele Öffnungen (90) aufweist, wie es Blätter (2) gibt, so große Dimensionen ihrer Öffnungen (90) aufweist, daß diese für den Durchgang von elastischen Verbindungs- und Dämpfungsorganen (106) bei Mitnahme des entsprechenden Blattes mit ihren Schlagwinkeln zusätzlich zu dem Durchgang für die Gelenke (9) des Blattes ausreichen.

4. Nabe nach Anspruch 1,
**dadurch gekennzeichnet,**
daß die dünne Wand, welche den Innenring und den Außenring miteinander verbindet,ein Gabelgelenk zur Befestigung von elastischen Verbindungs- und Dämpfungsmitteln jedes Blattes im Mitnahmezustand trägt.

5. Nabe nach den Ansprüchen 1-4,
**dadurch gekennzeichnet,**
daß die Nabe (1) metallisch ist und außerdem mit dem Sockel (4) und dem Mast (3) einstückig ausgebildet ist.

6. Nabe nach einem der Ansprüche 1-4,
**dadurch gekennzeichnet,**
daß die Nabe (131) metallisch ist und außerdem einstückig mit dem Sockel (134) geformt ist.

7. Nabe der einem der Ansprüche 1-4,
**dadurch gekennzeichnet,**
daß der Sockel (111) metallisch ist und mit dem Sockel (114) und dem Mast (3) mittels lösbarer Verbindungsmittel verbunden ist.

8. Nabe nach Anspruch 7,
**dadurch gekennzeichnet,**
daß die Verbindungsmittel der Nabe (111) auf dem Sockel (114) Verbindungsmittel des Gelenks (5) des Blattes (2) auf dem Innenring (118) der Nabe (111) sind.

9. Nabe nach einem der Ansprüche 1-8,
**dadurch gekennzeichnet,**
daß die Ringe eine Kreiszylinderform aufweisen.

10. Nabe nach einem der Ansprüche 1-8,
**dadurch gekennzeichnet,**
daß die Ringe (7) und (8) eine Vieleckform mit abgerundeten Kuppen (11) und (13) aufweisen, von denen jede Kuppe einer Achse eines Blattes (2) entspricht.

11. Nabe nach einem der Ansprüche 1-10,
**dadurch gekennzeichnet,**
daß wenigstens ein Ring (47,48) mit einem Riemen (55,56) umgeben ist, der einen Verstärkungs- und Sicherheitsgurt bildet.

12. Nabe nach Anspruch 11,
**dadurch gekennzeichnet,**
daß der Riemen (55,56), welcher den Verstärkungs- und Sicherheitsgurt bildet, aus Fasermaterial mit Fasern hoher mechnischer Widerstandsfähigkeit besteht, die durch polymerisierbaren Kunststoff zusammengehalten werden.

13. Nabe nach Anspruch 11,
**dadurch gekennzeichnet,**
daß der Riemen (55,56), welcher den Verstärkungs- und Sicherheitsgurt bildet, aus Bändern von Fasern hoher mechanischer Widerstandsfähigkeit gebilet ist, welche durch polymerisierbaren Kunststoff zusammengehalten werden.

14. Nabe nach einem der Ansprüche 11-13,
**dadurch gekennzeichnet,**
daß der Ring (47,48), der einen Riemen (55,56) trägt, welcher einen Verstärkungs- und Sicherheitsgurt bildet, mit einem Sitz (57,58) versehen ist, welcher dem Umfang des Rings (47,48) folgt, dessen vieleckiger Abschnitt radial zu dem Äußeren des Sitzes (57,58) verläuft, welcher den Riemen (55,56) aufnimmt, welcher den Verstärkungs- und Sicherheitsgurt bildet.

15. Nabe nach Anspruch 14,
**dadurch gekennzeichnet,**
daß der Sitz (57,58) mit quadratischem Querschnitt geformt ist.

16. Nabe nach Anspruch 14,
**dadurch gekennzeichnet,**
daß der Sitz (57,58) mit rechteckförmigem Querschnitt ausgebildet ist.

17. Nabe nach einem der Ansprüche 11-16.
**dadurch gekennzeichnet,**
daß der Riemen (55,56), welcher den Verstärkungs- und Sicherheitsgurt bildet, aus in einer Richtung ausgerichteten Fasern hoher mechanischer Widerstandsfähigkeit besteht, die mit polymerisierbarem Kunststoff vorimprägniert sind, und aus Fasermaterial oder Bändern gebildet ist, die aus solchen Fasern bestehen, die auf jeden Ring durch Wickeln aufgebracht werden, wonach der Kunststoff heiß polymerisiert wird.

18. Nabe nach einem der Ansprüche 11-17
**dadurch gekennzeichnet,**
daß die Fasern hoher Widerstandsfähigkeit, welche den Riemen (55,56) bilden, welcher einen Verstärkungs- und Sicherheitsgurt darstellt, Aramidfasern sind und daß der Imprägnierungskunststoff von der Epoxydgattung ist.

19. Nabe nach einem der Ansprüche 11, 14, 15 und 16,
**dadurch gekennzeichnet,**
daß der Riemen (55,56), welcher den Sicherheits- und Verstärkungsgurt bildet, aus Metallfasern besteht, die in ein Elastomer eingebettet sind.

20. Nabe nach einem der Ansprüche 1 und 2,
**dadurch gekennzeichnet,**
daß die Nabe (181) aus Verbundmaterial besteht.

21. Nabe nach Anspruch 20,
**dadurch gekennzeichnet,**
daß jeder Ring (187,188) aus so vielen übereinstimmenden Flachstücken (195) besteht, wie es Blätter (2) gibt, daß diese Flachstücke (195) dergestalt aufeinander gesetzt sind, daß sie eine zusammenhängende Gerippeeinheit bilden, daß die Flachstücke (195) eine abgerundete äußere Ecke (196) aufweisen und in der Symmetrieachse der Ecke (196) mit der Bohrung (192,194) versehen sind, welche das Befestigungsmittel des Gelenks (5) des Blattes (2) aufnimmt, und daß auf diesem Gerippe eine Schale angeordnet ist, die aus Fasern hoher Widerstandsfähigkeit besteht, welche mit heißpolymerisierbarem Kunststoff imprägniert sind, um Verstärkungsgurte (197,198) der Ringe (187,188) zu bilden, ebenso wie die dünne, die beiden Ringe (187,188) verbindende Wand (189), in welche die Öffnungen (190) zum Durchgang der Gelenke und Verbindungsorgane jedes Blattes geschnitten sind.

22. Nabe nach Anspruch 21,
**dadurch gekennzeichnet,**
daß die Flachstücke (195), welche das Gerippe der Ringe (187,188) bilden, aus gegossenem Kunststoffverbundmaterial mit geschnittenen Karbonfasern hergestellt sind.

23. Nabe nach Anspruch 21,
**dadurch gekennzeichnet,**
daß die Flachstücke (195), welche das Gerippe der Ringe (187,188) bilden, aus einer Schichtung von Karbongewebe, welches mit unter Hitze und Druck polymerisierbarem Kunststoff vorimprägniert ist, hergestellt ist.

24. Nabe nach einem der Ansprüche 21-23,
**dadurch gekennzeichnet,**
daß die Schale aus Fasern hoher Widerstandsfähigkeit um das Gerippe der Ringe (187,188) angeordnet ist, um die Verstärkungsriemen (197,198) der Ringe (187,188) zu bilden, und daß die dünne Wand (189), welche die beiden Ringe (187,188) verbindet, aus gewickeltem Fasermaterial besteht.

25. Nabe nach den Ansprüche 21-23,
**dadurch gekennzeichnet,**
daß die Schale aus Fasern hoher Widerstandsfähigkeit, die um das Gerippe der Ringe (187,188) angeordnet ist, um Verstärkungsgurte (197,198) der Ringe (187,188) und die dünne Verbindungswand (189) der beiden Ringe (187,188) zu bilden, aus gewickelten Bändern besteht.

26. Nabe nach einem Ansprüche 21-23,
**dadurch gekennzeichnet,**
daß die Schale aus Fasern hoher Widerstandsfähigkeit, die um das Gerippe der Ringe (187,188) angeordnet sind, um Verstärkungsgurte (197,198) der Ringe (187,188) und die dünne Verbindungswand (189) der beiden Ringe (187,188) zu bilden, aus drapierten Geweben hergestellt ist.

27. Nabe nach einem der Ansprüche 24-26,
**dadurch gekennzeichnet,**
daß die Fasern des Fasermaterials, die Fasern der gewickelten Bänder und die Fasern der drapierten Gewebe aus Karbon bestehen.

28. Nabe nach einem der Ansprüche 24-26,
**dadurch gekennzeichnet,**
daß die Fasern des Fasermaterials, die Fasern der gewickelten Bänder und die Fasern der drapierten Gewebe vom Aramidtyp sind.

29. Nabe nach Anspruch 20,
**dadurch gekennzeichnet,**
daß der kegelstumpfförmige Sockel (184), welcher den Innenring (188) mit der Kuppe des Masts (3) verbindet, durch eine Schichtung von Geweben hergestellt ist, welche mit gegossenem und heißpolymerisiertem Kunststoff imprägniert sind.

30. Nabe nach Anspruch 29,
**dadurch gekennzeichnet,**
daß die Gewebe, welche den Sockel (184) bilden, der den Innenring (188) mit dem Mast (3) verbindet, Gewebe sind, die mit Epoxydharz vorimprägniert sind.

31. Rotorkopf eines Drehflügelflugzeuges,
**dadurch gekennzeichnet,**
daß er eine Nabe gemäß einem der vorangehenden Ansprüche aufweist.

32. Rotorkopf nach Anspruch 31,
**dadurch gekennzeichnet,**
daß das Halte- und Gelenkorgan jedes Blattes (2) auf der Nabe (1) ein sphärischer laminierter Anschlag (5) ist, dessen innere Stütze (16) in dem Innern eines festen Schuhs (18) angebracht ist, welcher die Anbringung des Blattes (2) darstellt,und dessen äußere Stütze (17) sowohl mit dem Innenring (8) als auch mit dem Außenring (7) der Nabe über wenigstens einen Verbindungsstift (21) in Verbindung steht, der durch die äußere Stütze (17) und jede der einander entsprechenden Bohrungen (14,15), die in den Ringen (7,8) vorgesehen sind, hindurchgeht.

33. Rotorkopf nach Anspruch 32,
**dadurch gekennzeichnet,**
daß die äußere Stütze (17) des sphärischen laminierten Anschlags im Mitnahmezustand Befestigungsschrauben (71) festgehalten ist, welche durch einen der Ringe (47,48) der Nabe (41) hindurchgehen und beidseitig des Verbindungsstifts (21) angeordnet sind, wodurch die äußere Stütze (17) mit den beiden Ringen (47,48) der Nabe (41) verbunden werden.

34. Rotorkopf nach Anspruch 32,
**dadurch gekennzeichnet,**
daß der Verbindungsstift (21), der durch die äußere Stütze (17) des sphärischen laminierten Anschlags (5) und die entsprechenden Bohrungen in den Ringen (7,8) der Nabe (1) hindurchgeht, eine zylindrische Hohlachse (22) ist, die an einer ihrer Enden einen Flansch (23) umfaßt, der sich gegen die äußere Stirnseite (24) des entsprechenden Rings (7) abstützt, daß die Hohlachse eine Länge aufweist, die etwas geringer als der Abstand der beiden äußeren Stirnseiten (24,25) der Ringe (7,8) ist, und durch die ein Schraubenbolzen (28) hindurchreicht, dessen Kopf (29) sich auf dem Flansch (23) der Hohlachse (22) abstützt und dessen anderes Ende mit Gewinde (30) eine Hemm-Mutter (32) sowie eine Unterlegscheibe aufnimmt, die sich auf dem Rand der Bohrung (14) abstützt, die in den entsprechenden Ring (8) eingebracht ist.

35. Rotorkopf nach einem der Ansprüche 32-34,
**dadurch gekennzeichnet,**
daß jede Bohrung (12,14), die in den Ringen (7,8) der Nabe (1) ausgebildet ist, eine Hülse (33) mit einer Schulter (34) trägt, die auf der Innenseite (26,27) montiert ist, dergestalt, daß sie sich auf der Stütze (17) des laminierten Anschlags (5) abstützt und einen Zwischenträger zwischen den beiden Ringen (7,8) bildet.

36. Rotorkopf nach Anspruch 32,
**dadurch gekennzeichnet,**
daß die Anbringung des Blattes (2) in Form eines festen Schuhs, der den sphärischen laminierten Anschlag fortlaufend umschließt, in dem er sich auf dem Anschlag einfügt, durch Fasermaterial gebildet ist, welches den widerstandsfähigen Holm des Blattes (2) bildet und welches in dem Bereich des Einbringens des Blattes (2) als Schuh (18) mit rechteckförmigem Querschnitt ausgebildet ist.

37. Rotorkopf nach Anspruch 32,
**dadurch gekennzeichnet,**
daß die Anbringung des Blattes (2) als fester Schuh, der den sphärischen laminierten Anschlag fortlaufend umgibt und sich auf diesem Anschlag (5) einfügt, eine einstückige Zwischenmuffe (99) ist, die auf der Seite der Rotorachse an einen Bügel (100) rechteckförmigen Querschnitts angepaßt ist, um den Befestigungsschuh zu bilden und auf der entgegengesetzten Seite als Doppelbügel (101) angepaßt ist, um mit Befestigungsmitteln mit dem Fuß des Blattes (2) zusammenzuwirken, daß die Muffe (99) außerdem seitlich eine Ecke (102) aufweist, die an ihrem Ende mit einem Gabelgelenk (103) versehen ist, welches mit Steuereinrichtungen des Rotors verbunden ist, sowie eine Kugelkopfverbindung (104) für das Ende eines elastischen Rückholorgans (106) mit integrierter Dämpfung des Blattes im Mitnahmezustand aufweist.

38. Rotorkopf nach einem der Ansprüche 36 und 37,
**dadurch gekennzeichnet,**
daß die Anbringung des Blattes (2) als fester Schuh, der den sphärischen laminierten Anschlag fortlaufend umgibt, indem er auf diesem Anschlag angepaßt ist, in einen entsprechenden Sitz (37) gedrückt gehalten wird, der in der inneren Stütze (16) des Anschlags (5) durch eine Platte (19) gehalten wird, die auf der Stütze (16) durch Schrauben (20) gehalten wird.

39. Rotorkopf nach einem der Ansprüche 31-38,
**dadurch gekennzeichnet,**
daß er Schlagbewegungsanschläge aufweist.

40. Rotorkopf nach Anspruch 39,
**dadurch gekennzeichnet,**
daß jede Blattanbringung einen hohen Anschlag und/oder einen tiefen Anschlag für die Blattbewegung aufweist, daß der Schuh (63) des hohen Anschlags in unmittelbare Anschlagstellung für einen gegebenen positiven Schlagwinkel auf dem Umfang des Außenrings (47) gelangt und daß der Schuh (64) des tiefen Anschlags in Abstützstellung für einen gegebenen negativen Schlagwinkel auf einer metallischen Verstärkung gelangt, die auf dem Umfang des Innenrings (48) befestigt ist.

41. Rotorkopf nach einem der Ansprüche 31-40,
**dadurch gekennzeichnet,**
daß jede Blattanbringung Mitnahmeanschläge (66,69) aufweist, die an den seitlichen Ecken beidseitig der Achse des Blattes (2) angeordnet sind und die für einen gegebenen Mitnahmewinkel sich direkt gegen den Umfang wenigstens einer der Ringe (47,48) abstützen.

42. Rotorkopf nach Anspruch 39,
**dadurch gekennzeichnet,**
daß jede Blattanbringung einen hohen Anschlag und/oder einen tiefen Anschlag für die Schlagbewegung aufweist, daß der Schuh (153) des hohen Anschlags in direkter Anlage für einen gegebenen positiven Schlagbewegungswinkel auf dem Umfang des Außenrings (137) gelangt und daß der Schuh (154) des tiefen Anschlags in Abstützstellung für einen gegebenen negativen Schlagbewegungswinkel an dem Umfang eines reziproken festen Rings (155) gelangt, der an seiner Stelle unter dem Innenring (138) der Nabe (131) und parallel zu letzterem mittels Bügeln (156) gehalten wird, die an der Nabe (131) durch den oder die Befestigungsschraubenbolzen (159) der Stütze (17) des laminierten Anschlags (5) auf den Ringen (137,138) der Nabe (139) befestigt sind, wobei diese Bügel (156) in der Art angeordnet sind, daß sie dem reziproken Ring (155) eine begrenzte Schlagmöglichkeit in seiner eigenen Ebene lassen.
